(19) Europäisches Patentamt
European Patent Office
Office européen des brevets

(11) **EP 3 238 980 B1**

(12) **EUROPEAN PATENT SPECIFICATION**

(45) Date of publication and mention
of the grant of the patent:
**21.10.2020 Bulletin 2020/43**

(21) Application number: **15877983.5**

(22) Date of filing: **04.12.2015**

(51) Int Cl.:
*B60L 15/40* (2006.01)    *B60L 7/10* (2006.01)
*B60W 30/18* (2012.01)    *B61L 3/00* (2006.01)
*B60L 7/24* (2006.01)    *B61L 27/04* (2006.01)

(86) International application number:
**PCT/JP2015/084211**

(87) International publication number:
**WO 2016/114032 (21.07.2016 Gazette 2016/29)**

(54) **AUTOMATIC TRAIN OPERATING DEVICE, AUTOMATIC TRAIN CONTROL METHOD, AND PROGRAM**

AUTOMATISCHE ZUGBETRIEBSVORRICHTUNG, AUTOMATISCHES ZUGSTEUERUNGSVERFAHREN UND PROGRAMM

DISPOSITIF DE FONCTIONNEMENT AUTOMATIQUE DE TRAIN, PROCÉDÉ DE COMMANDE TRAIN TRAIN AUTOMATIQUE, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2015 JP 2015004938**

(43) Date of publication of application:
**01.11.2017 Bulletin 2017/44**

(73) Proprietor: **Mitsubishi Heavy Industries Engineering, Ltd.**
**Yokohama-shi, Kanagawa 220-8401 (JP)**

(72) Inventors:
• **YANAI Noritaka**
**Tokyo 108-8215 (JP)**
• **WAKASUGI Kazuyuki**
**Tokyo 108-8215 (JP)**
• **MIYAJIMA Yutaka**
**Tokyo 108-8215 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
GB-A- 2 460 528    JP-A- 2000 261 903
JP-A- 2005 333 734    JP-A- 2009 027 784
JP-A- 2009 055 694    JP-A- 2009 296 733
US-A1- 2011 184 619    US-A1- 2013 096 741

**Description**

[Technical Field]

The present invention relates to an automatic train driving apparatus, an automatic train control method, and a program.

[Background Art]

There is a vehicle equipped with an ATP device for automatically operating a brake on the basis of a command from an automatic train protection (ATP) track antenna when the speed exceeds a predetermined speed.
A related art is disclosed in Patent Document 1. A device disclosed in Patent Document 1 realizes good stop accuracy and riding comfort by switching a plurality of brake notches.

[Citation List]

[Patent Document]

[Patent Document 1]
Japanese Unexamined Patent Application, First Publication No. 2011-87364
GB 2 460 528 A discloses a fixed-position automatic stop control means of a control system for controlling an electric vehicle having stored in advance a full-electric brake deceleration pattern capable of performing deceleration within the range of brake force obtained by the electric energy regeneration of a main motor. The vehicle is stopped at a target position via the full-electric brake deceleration pattern. By performing the fixed-position automatic stop control using only the regenerative brake, it becomes possible to prevent futile consumption of kinetic energy by the air brake, and since the frequency of use of the air brake is reduced, the abrasion of the brake shoe can be suppressed. The vehicle may have a plurality of patterns, either for the gradient/curve of different locations and/or a constant brake force pattern. The deceleration pattern may be automatically or manually switched.
US 2013 096 741 A1 discloses an apparatus and method for controlling a train speed, the method including receiving an operation data, estimating a future train speed subsequent to a predetermined time of the train, using the operation data and dynamics model of a train, calculating a TTSLC {Time-To-Speed-Limit Crossing, a time when the train exceeds an ATP (Automatic Train Protection) speed limit}, and outputting a deceleration command by determining an additional braking force, in a case the TTSLC is smaller than a predetermined threshold. US 2011 184 619 A discloses a vehicle controlling apparatus which includes a storage unit, a setting unit, a changing unit, and a controller. The storage unit stores plurality sets of target information. The setting unit sequentially sets at least part of the plurality of target information to be satisfied until a vehicle stops in a given position based on the part of the plurality of target information. The changing unit sequentially changes one target information to next target information in series in the part of the plurality of target information when the one target information is satisfied. The controller which controls an operation of the vehicle so that the operation satisfies the target set by the changing unit.

[Summary of Invention]

[Technical Problem]

In a railway system, a vehicle equipped with an ATP device (vehicle antenna) communicating with an ATP track antenna generally sets an upper speed limit for each position on a trajectory based on a current position of a vehicle by the ATP device as a target speed pattern. The vehicle specifies an acceleration to track the speed pattern. The vehicle puts upper and lower limits on the specified acceleration based on motor performance, and puts a limit on a change rate (jerk limit, limit of a change rate of vehicle acceleration) to ensure minimum riding comfort. However, when the vehicle puts these restrictions on the acceleration, actually, the change rate of the vehicle acceleration frequently reaches the limit. As a result, the riding comfort of the vehicle worsens. In addition, with these restrictions on the acceleration, in the speed change of the vehicle, undershoot in which the speed crosses to the lower speed side of a target low speed when the speed is changed from a high speed to the low speed, and overshoot in which the speed crosses to the higher speed side of a target high speed when the speed is changed from a low speed to the high speed occur. As a result, the riding comfort of the vehicle worsens and the traveling time of the vehicle also increases.
Therefore, a technology which can improve ride comfort of an automatic train and shorten traveling time is needed.
An object of the present invention is to provide an automatic train driving apparatus, an automatic train control method, and a program which can solve the above problems.

[Solution to Problem]

According to the present invention the above object is achieved by an automatic train driving apparatus according to claim 1 and by an automatic train control method according to claim 5. The dependent claims are directed to different advantageous aspects of the invention.

[Advantageous Effects of Invention]

According to the automatic train driving apparatus, the automatic train control method, and the program, it is possible to improve the riding comfort of an automatic train and to shorten traveling time.

[Brief Description of Drawings]

Fig. 1 is a diagram which shows a vehicle according to a first embodiment of the present invention.
Fig. 2 is a diagram which shows a target speed transition pattern generated by an automatic train driving apparatus according to the first embodiment of the present invention.
Fig. 3 is a diagram which shows a processing flow of the automatic train driving apparatus according to the first embodiment of the present invention.
Fig. 4 is a diagram which shows a vehicle according to a second embodiment of the present invention.
Fig. 5 is a diagram which shows an example of the characteristics of a regenerative brake of a general motor in the second embodiment of the present invention.
Fig. 6 is a diagram which shows an example of a target speed transition pattern generated by an automatic train driving apparatus in the second embodiment of the present invention.
Fig. 7 is a processing flow of the automatic train driving apparatus according to the second embodiment of the present invention.
Fig. 8 is a diagram which shows a vehicle according to a third embodiment of the present invention.
Fig. 9 is a diagram which shows a processing flow of an automatic train driving apparatus according to the third embodiment of the present invention.

[Description of Embodiments]

<First embodiment>

A vehicle 10 according to a first embodiment of the present invention will be described.

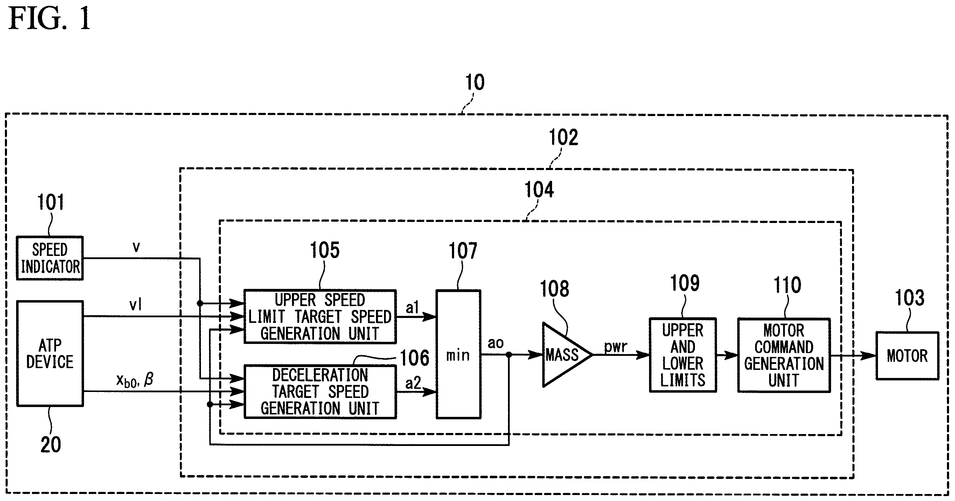

Fig. 1 is a diagram which shows an example of the vehicle 10 according to the first embodiment of the present invention.
As shown in Fig. 1, the vehicle 10 according to the first embodiment includes a speed indicator 101, an automatic train driving apparatus 102, a motor 103, and an automatic train protection (ATP) device 20.
The speed indicator 101 measures a speed v of the vehicle 10.
The automatic train driving apparatus 102 includes a speed control unit 104.
The speed control unit 104 includes an upper speed limit target speed generation unit 105, a deceleration target speed generation unit 106, a minimum value selection unit (referred to as min in Fig. 1) 107, a mass multiplication unit (referred to as mass in Fig. 1) 108, a traction force restriction unit (referred to as upper and lower limits in Fig. 1) 109, and a motor command generation unit 110.
The upper speed limit target speed generation unit 105 calculates a target acceleration a1 of the vehicle 10 on the basis of a current speed v, a current upper speed limit v1, a current position, and a current acceleration reached on the basis of a previously calculated target acceleration. The position used for calculation of a target acceleration may be a position calculated on the basis of information on a reference position and an integrated value of the speed v. The information on the reference position includes a deceleration completion position $x_{bo}$ to be described below which the ATP device 20 obtains from the ATP track antenna. In addition, a position used for calculating target acceleration may be a position calculated based on an integrated value of the speed v from a starting point. Moreover, the position used for calculating target acceleration may also be a position calculated on the basis of a wheel diameter of the vehicle 10 and the number of rotations.
The deceleration target speed generation unit 106 calculates an acceleration a2 of the vehicle 10 on the basis of a current speed v, a deceleration $\beta$ in a current speed v, a position of an ATP track antenna, and previously calculated target acceleration.

The minimum value selection unit 107 compares the acceleration a1 calculated by the upper speed limit target speed generation unit 105 and the acceleration a2 calculated by the deceleration target speed generation unit 106, and outputs a target acceleration ao which is the smallest acceleration among the accelerations.

The mass multiplication unit 108 multiplies the target acceleration ao output by the minimum value selection unit 107 by the mass of the vehicle 10 to calculate a traction force pwr.

The traction force restriction unit 109 restricts the traction force pwr on the basis of the traction force pwr calculated by the mass multiplication unit 108 and the function of the motor 103.

The motor command generation unit 110 generates a motor command for driving the motor 103 so that the motor 103 generates desired torque on the basis of the traction force pwr output by the traction force restriction unit 109.

With each of the functional units including the upper speed limit target speed generation unit 105, the deceleration target speed generation unit 106, the minimum value selection unit 107, the mass multiplication unit 108, the traction force restriction unit 109, and the motor command generation unit 110, the speed control unit 104 controls deceleration of the speed of the vehicle 10 using the braking force of a regenerative brake in accordance with the speed of the vehicle 10 indicated by an ideal target speed transition pattern B (B1, B2) (target speed pattern) when the ATP device 20 receives a notification indicating that the vehicle 10 has approached a stop limit position (for example, a non-opening area at which a vehicle must stop between stations) from the ATP track antenna. The ideal target speed transition pattern B is calculated using the brake force characteristic of the regenerative brake indicating a relationship between the speed of the vehicle 10 and the decreasing speed thereof per unit time when the speed of the vehicle 10 is controlled in a deceleration manner with the maximum brake force of the regenerative brake.

The speed control unit 104 acquires the upper speed limit v1 from the ATP device 20. The speed control unit 104 calculates the target speed transition pattern B of a speed lower than the upper speed limit v1. The speed control unit 104 calculates a control transition pattern C (C1, C2) of the vehicle 10 every processing cycle time shorter than a time until a target time so that a train speed after the elapse of a predetermined target time based on a current time coincides with the target speed transition pattern B. The speed control unit 104 determines the acceleration of the vehicle 10 at a next timing based on a result of the calculation.

The speed control unit 104 calculates a first target speed transition pattern B1 (first target speed pattern) of travel at a fixed speed as the target speed transition pattern B lower than the upper speed limit v1. The speed control unit 104 calculates a second target speed transition pattern B2 (second target speed pattern) of travel in a decelerating manner toward a stop limit position as the target speed transition pattern B lower than the upper speed limit v1. The speed control unit 104 calculates a first target speed transition pattern of the vehicle 10 at a next timing at which the train speed coincides with the first target speed transition pattern B1 after a predetermined target time based on a current time. The speed control unit 104 calculates a second target speed transition pattern of the vehicle 10 at a next timing at which the train speed coincides with the second target speed transition pattern B2 after a predetermined target time based on a current time. The speed control unit 104 compares the accelerations of a first control transition pattern and a second control transition pattern in a next control step, and sets the lower acceleration as the acceleration of the vehicle 10.

The speed control unit 104 calculates effective torque on the basis of the acceleration of the vehicle 10 and the mass of the vehicle 10.

The speed control unit 104 controls the speed v of the vehicle 10 using at least one of control means (control unit) other than the regenerative brake and the regenerative brake when an acceleration is a negative acceleration.

The speed control unit 104 acquires information on the upper speed limit v1 and the deceleration $\beta$ from the ATP device 20. The speed control unit 104 calculates a current position on the basis of the acquired information on the upper speed limit v1 and the deceleration $\beta$. For example, the information on the upper speed limit v1 and the deceleration $\beta$ is an upper limit speed start position, a deceleration completion position, and the deceleration $\beta$.

The motor 103 operates on the basis of a motor command generated by the motor command generation unit 110.

The ATP device 20 receives the information on the upper speed limit v1 and the deceleration $\beta$ from the ATP track antenna. The ATP device 20 transmits the information on the upper speed limit v1 and the deceleration $\beta$ to the speed control unit 104.

Next, a target speed transition pattern B generated by the automatic train driving apparatus 102 according to the first embodiment of the present invention will be described.

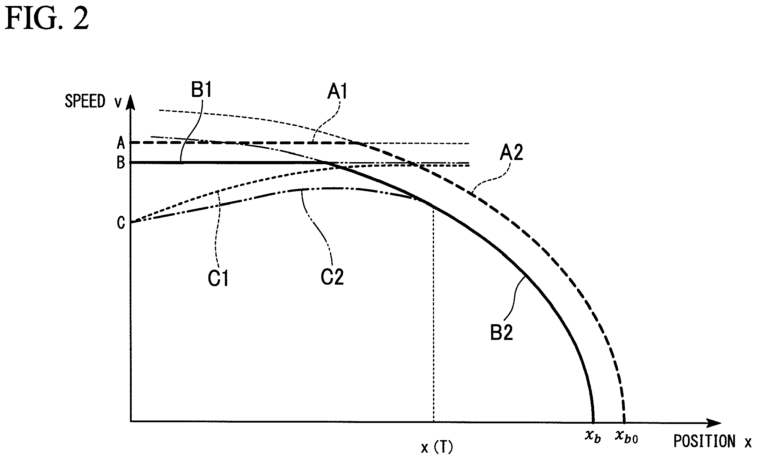

Fig. 2 is a diagram which shows an example of the target speed transition pattern B generated by the automatic train driving apparatus 102.

In Fig. 2, the horizontal axis represents a position x on a trajectory based on a current position of a train, and the vertical axis represents a speed v at a position of the train. In addition, $x_{b0}$ represents a deceleration completion position. For example, the deceleration completion position $x_{b0}$ is a position on a side of the position of the last vehicle of a train traveling forward when the train is congested, a stop indication signal, or the like. The ATP device 20 receives information including the deceleration completion position $x_{b0}$ from the ATP track antenna. The ATP device 20 transmits the information including the deceleration completion position $x_{b0}$ received from the ATP track antenna to the automatic train driving apparatus 102. The automatic train driving apparatus 102 calculates information on a command speed transition pattern A1 and a command speed transition pattern A2 (Fig. 2) indicating a command upper speed limit commanded by the ATP device 20 on the basis of the information (the upper speed limit v1, the deceleration completion position $x_{b0}$, the deceleration $\beta$) received from the ATP device 20. Specifically, the automatic train driving apparatus 102 calculates information on the command speed transition pattern A1 when the vehicle 10 travels at a speed equal to the current upper speed limit v1. In addition, the automatic train driving apparatus 102 calculates information on the command speed transition pattern A2 on the basis of the deceleration completion position $x_{b0}$ and the deceleration $\beta$. The information on the command speed transition pattern A2 shows a relationship between the position and the speed of the vehicle 10 when the vehicle 10 stops at the deceleration completion position $x_{b0}$ and decelerates with the deceleration $\beta$ up to the deceleration completion position $x_{b0}$. Then, the automatic train driving apparatus 102 determines the command speed transition pattern A1 in a section from a current position of the vehicle 10 to a position at which the command speed transition pattern A1 and the command speed transition pattern A2 intersect, and the command speed transition pattern A2 in a section up to the deceleration completion position $x_{b0}$ after the intersection of the patterns as an ATP pattern A. The automatic train driving apparatus 102 performs braking control using a mechanical brake and the like when a speed indicated by the ATP pattern A is reached. In the above description, the automatic train driving apparatus 102 is described as an apparatus for calculating the ATP pattern A on the basis of the information received from the ATP track antenna by the ATP device 20. However, the ATP device 20 may receive the ATP pattern A from the ATP track antenna and the automatic train driving apparatus 102 may receive the ATP pattern A from the ATP device 20. In addition, the automatic train driving apparatus 102 determines whether the command speed transition pattern A1 and the command speed transition pattern A2 intersect with each other, and when they do not intersect with each other, the automatic train driving apparatus 102 may determine only the command speed transition pattern A2 as the ATP pattern A. A case in which the command speed transition pattern A1 and the command speed transition pattern A2 do not intersect with each other corresponds to, for example, an event occurring in an emergency such as when the deceleration completion position $x_{b0}$ is nearby, and a speed transition when immediate deceleration is required without traveling at a fixed speed.

The train can realize comfortable driving without generating an emergency brake by decelerating a speed at each position on a trajectory based on a current position with a margin to the speed v indicated by the ATP pattern A. When the speed control unit 104 decelerates the speed v of the vehicle 10 using braking force of a regenerative brake only in accordance with the speed v of the vehicle 10 based on the target speed transition pattern B, the speed v of the vehicle 10 is fast enough to cause an emergency brake to be applied in some cases. In this case, the speed control unit 104 may control deceleration of the speed v of the vehicle 10 using braking means such as a mechanical brake rather than the regenerative brake.

After the ATP pattern A is determined, the automatic train driving apparatus 102 calculates the target speed transition pattern B1 and the target speed transition pattern B2 (refer to Fig. 2). Each of the target speed transition patterns B1 and B2 is one of ideal target speed patterns which can be tracked using the speed of the vehicle 10 when the braking force of the regenerative brake calculated using only the brake force characteristic of the regenerative brake is used. The target speed transition pattern B1 shows the position of the vehicle 10 at a speed equal to the speed at each position slowed by a fixed speed on the basis of the command speed transition pattern A1 and a speed transition at the position of the vehicle 10. The ATP device 20 determines a target deceleration completion position $x_b$ which is a predetermined distance closer to the vehicle 10 than the deceleration completion position $x_{b0}$. The predetermined distance is a distance with a margin in which deceleration can be performed up to the deceleration completion position $x_{b0}$ even if an error of an operation and/or a measuring instrument is included. Then, the automatic train driving apparatus 102 calculates information on the target speed transition pattern B2 on the basis of the deceleration completion position $x_{b0}$ and the deceleration $\beta$. The information on the target speed transition pattern B2 shows a relationship between the position x and the speed v of the vehicle 10 when the vehicle 10 stops at the position $x_b$ based on the deceleration completion position $x_{b0}$, and decelerates with the deceleration $\beta$ up to the position $x_b$. Then, the automatic train driving apparatus 102 determines the target speed transition pattern B1 in a section from a current position of the vehicle 10 to a position at which the target speed transition pattern B1 and the target speed transition pattern B2 intersect with each other and the target speed transition pattern B2 in a section up to the target deceleration completion position $x_b$ after the position of the intersection as the target speed transition pattern B (B1, B2). The automatic train driving apparatus 102 sets the target speed transition pattern B (B1, B2) as an upper limit, and controls the speed v of the vehicle 10 so as not to exceed a speed indicated by the target speed transition pattern B (B1, B2) at each position. The automatic train driving apparatus 102 may calculate only the target speed transition pattern B2 when the command speed transition pattern B1 and the command speed transition pattern B2 do not intersect with each other from the current position of the vehicle 10 in the processing described above, and may set a relationship between the position x and the speed v indicated by this pattern as the target speed transition pattern B.

The automatic train driving apparatus 102 calculates information on the control transition pattern C (C1, C2) indicating a future position of the vehicle 10 and a speed transition pattern at each position so that a current speed of the vehicle 10 coincides with a speed indicated by the target speed transition pattern B (B1, B2) at a position of the vehicle 10 after a time indicated by a predetermined prediction period if the target speed transition pattern B (B1, B2) described above is calculated. The prediction period is a period until the speed of the vehicle 10 smoothly connects to the speed indicated by the target speed transition pattern B after T seconds from the present.

Here, calculation processing of a control transition pattern will be described in detail.

First, the speed of the vehicle 10 at each time in a prediction period can be expressed by a polynomial (cubic function in this example) as shown in the following Equation (1).

$$v(t) = k_0 + k_1 t + k_2 t^2 + k_3 t^3 \cdots (1)$$

The acceleration of the vehicle 10 at each time in a prediction period (time until a target time) can be expressed by the following Equation (2) by differentiating Equation (1).

$$a(t) = k_1 + 2k_2 t + 3k_3 t^2 \cdots (2)$$

In addition, the position of the vehicle 10 at each time in the prediction period can be expressed by the following Equation (3) by integrating Equation (1).

$$x(t) = x_0 + k_0 t + \frac{1}{2}k_1 t^2 + \frac{1}{3}k_2 t^3 + \frac{1}{4}k_3 t^4 \cdots (3)$$

Then, the automatic train driving apparatus 102 calculates a relationship between a position and a speed when the speed of the vehicle 10 coincides with a speed indicated by the target speed transition pattern B1 at a position of the vehicle 10 in the prediction period as calculation processing of a first control transition pattern C1. Specifically, if the current speed of the vehicle 10 is set as $v_0$, the current acceleration of the vehicle 10 is set as $a_0$, the speed of the vehicle 10 at a time t is represented as v(t), and the acceleration of the vehicle 10 at the time t is represented as a(t), the following Equations (4) and (5) are obtained.

$$v(0) = v_0 \cdots (4)$$

$$a(0) = a_0 \cdots (5)$$

In addition, the speed and the acceleration in the prediction period are shown in the following Equations (6) and (7).

$$v(T) = v_r \cdots (6)$$

$$a(T) = 0 \cdots (7)$$

$v_r$ is the speed in the target speed transition pattern B1 corresponding to the predicted position of the vehicle 10 in the prediction period. In addition, since the target speed transition pattern B1 is a uniform speed and the acceleration is zero, a(T) is zero.

Then, the following Equations (8) to (11) are obtained by substituting Equation (4) to Equation (7) into Equation (1) and Equation (2).

$$v(0) = k_0 = v_0 \cdots (8)$$

$$v(T) = k_0 + k_1 T + k_2 T^2 + k_3 T^3 = v_r \cdots (9)$$

$$a(0) = k_1 = a_0 \cdots (10)$$

$$a(T) = k_1 + 2k_2 T + 3k_3 T^2 \cdots (11)$$

Then, the automatic train driving apparatus 102 calculates $k_0$ to $k_3$ by solving simultaneous equations shown in Equation (8) to Equation (11). Then, the automatic train driving apparatus 102 calculates the first control transition pattern C1 by substituting $k_0$ to $k_3$ into Equation (3).

In addition, the automatic train driving apparatus 102 calculates a relationship between a position and a speed when the speed of the vehicle 10 coincides with a speed indicated by the target speed transition pattern B2 at a position of the vehicle 10 after the prediction period of T seconds as deriving processing of the second control transition pattern C2 shown by a position (distance) with respect to a current position which is obtained by integrating the polynomial shown by Equation (1). Specifically, the target speed transition pattern B2 is set to be a curve which satisfies the following Equation (12), the current speed of the vehicle 10 is represented as $v_0$, the current acceleration of the vehicle 10 is represented as $a_0$, the speed of the vehicle 10 at a time t is represented as v(t), and the acceleration of the vehicle 10 at the time t is represented as a(t).

$$x(t) = x_b - [v(t)^2 \div (2\beta)] \cdots (12)$$

In this case, the following Equations (13) and (14) are obtained.

$$v(0) = v_0 \cdots (13)$$

$$a(0) = a_0 \cdots (14)$$

In addition, the acceleration a(T) and the position x(T) in the prediction period are represented by the following Equations (15) and (16).

$$a(T) = -\beta \cdots (15)$$

$$x(T) = x_b - [v(T)^2 \div (2\beta)] \cdots (16)$$

$-\beta$ is the deceleration $\beta$ in the target speed transition pattern B1 corresponding to the predicted position of the vehicle 10 in the predicted period. In addition, the target speed transition pattern B1 is a curve satisfying Equation (12), and thus the position of the vehicle 10 is represented by Equation (16).

Then, the following Equations (17) to (20) are obtained by substituting Equation (13) and Equation (14) into Equation (1), Equation (15) into Equation (2), and Equation (16) into Equation (3).

$$v(0) = k_0 = v_0 \cdots (17)$$

$$a(0) = k_1 = a_0 \cdots (18)$$

$$a(T) = k_1 + 2k_2 T + 3k_3 T^2 = -\beta \cdots (19)$$

$$x(T) = x_0 + k_0 T + \frac{1}{2} k_1 T^2 + \frac{1}{3} k_2 T^3 + \frac{1}{4} k_3 T^4$$
$$= x_b - [(k_0 + k_1 T + k_2 T^2 + k_3 T^3)^2 \div (2\beta)] \cdots (20)$$

Then, the automatic train driving apparatus 102 calculates $k_0$ to $k_3$ by solving simultaneous equations shown in Equation (17) to Equation (20). Then, the automatic train driving apparatus 102 calculates a second control transition pattern C2 by substituting $k_0$ to $k_3$ into Equation (3).

The speed control unit 104 repeatedly calculates the coefficient described above every period shorter than the predicting period T. For example, the speed control unit 104 repeatedly calculates the coefficient of a polynomial every 100 milliseconds when the prediction period T is 5 seconds.

The calculation processing of the control transition patterns (C1 and C2) is ended by the above processing.

Next, the upper speed limit target speed generation unit 105 calculates an acceleration ax until the speed of the vehicle 10 reaches a speed indicated by the first control transition pattern C1 at the position of a next timing (after 100 milliseconds) on the basis of a relationship between a position and a speed indicated by the first control transition pattern C1. In addition, the deceleration target speed generation unit 106 calculates an acceleration ay until the speed of the vehicle 10 reaches a speed indicated by the second control transition pattern C2 corresponding to the position of a next timing (after 100 milliseconds) on the basis of a relationship between a position and a speed indicated by the second control transition pattern C2. Then, the minimum value selection unit 107 compares the calculated acceleration ax with the calculated acceleration ay and outputs the smaller value.

Next, processing performed by the automatic train driving apparatus 102 according to the first embodiment will be described.

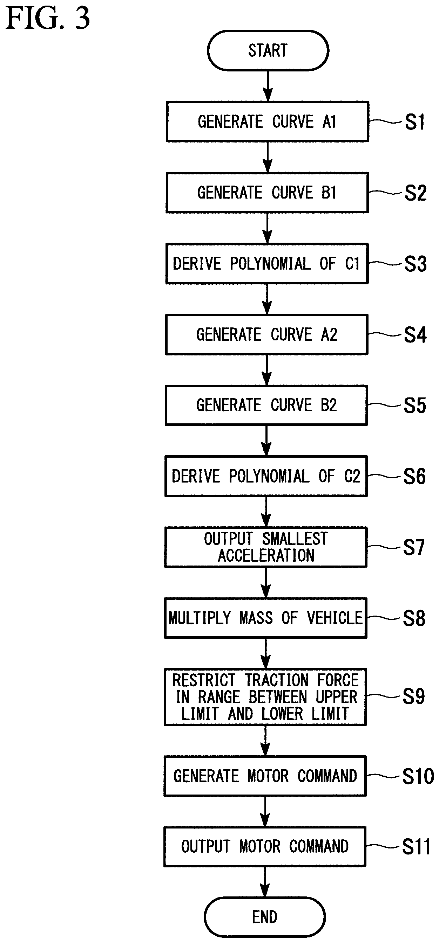

Fig. 3 is a diagram which shows an example of the processing flow of the automatic train driving apparatus 102 according to the first embodiment.

While the vehicle 10 travels, the upper speed limit target speed generation unit 105 of the speed control unit 104 acquires a speed from the speed indicator 101. In addition, while the vehicle 10 travels, the ATP device 20 acquires information which includes information showing a corresponding relationship between a position and an upper speed limit at the position and the position of the ATP track antenna from the ATP track antenna when the ATP device 20 passes immediately above the ATP track antenna. The ATP device 20 transmits the acquired information to the upper speed limit target speed generation unit 105. The upper speed limit target speed generation unit 105 calculates a current position from a cumulative value of speed based on the acquired position of the ATP track antenna. Then, the upper speed limit target speed generation unit 105 generates the command speed transition pattern A1 in Fig. 2 which is a part of the ATP pattern A indicating a speed at each time from the present to a time after the prediction period T elapses on the basis of the information indicating a corresponding relationship between a position and an upper speed limit and the current position (step S1).

The upper speed limit target speed generation unit 105 generates the target speed transition pattern B1 which is a part of the target speed transition pattern B slower than the speed in each position of the command speed transition pattern A1 (step S2). The upper speed limit target speed generation unit 105 generates, for example, the target speed transition pattern B1 having a speed that is 5 kilometers per hour slower than the speed at each position of the command speed transition pattern A1.

The upper speed limit target speed generation unit 105 calculates the coefficients $k_0$ to $k_3$ when the speed of the vehicle 10 smoothly connects to the target speed transition pattern B1 after the elapse of the prediction period of T seconds, and derives a polynomial indicating the first control transition pattern C1 (step S3). For example, if the speed v(t) is represented by a polynomial of a cubic function expressed by Equation (1), the upper speed limit target speed generation unit 105 receives a previously calculated target acceleration (initially zero) output by the minimum value selection unit 107 and performs an operation as shown in Equation (1), Equation (2), and Equation (4) to Equation (11) described above. Then, the upper speed limit target speed generation unit 105 calculates the coefficient of $k_0$ to $k_3$ by solving simultaneous equations of Equation (8) to Equation (11).

The upper speed limit target speed generation unit 105 calculates a coefficient for deriving the acceleration a1 by the processing of step S3. The upper speed limit target speed generation unit 105 outputs the calculated acceleration a1 to the minimum value selection unit 107.

In addition, while the vehicle 10 travels, the deceleration target speed generation unit 106 acquires the speed v from the speed indicator 101. Moreover, while the vehicle 10 travels, the ATP device 20 acquires information including information on a corresponding relationship between the position of the ATP track antenna and the deceleration β from the ATP track antenna when passing immediately above the ATP track antenna. The ATP device 20 transmits the acquired information to the deceleration target speed generation unit 106. The deceleration target speed generation unit 106 calculates a current position from a cumulative value of speed based on the acquired position of the ATP track antenna. Then, the deceleration target speed generation unit 106 generates the command speed transition pattern A2 based on the information on a corresponding relationship between the position of the ATP track antenna and the deceleration β and the current position (step S4). The command speed transition pattern A2 is a part of the ATP pattern A indicating the corresponding relationship between the position and the deceleration β based on the current position as shown in Fig. 2. For example, the deceleration target speed generation unit 106 acquires information including Equation (12) showing the relationship between the position and the deceleration β and the target deceleration completion position $x_b$ as the information on the corresponding relationship between the position and the deceleration β. Then, the deceleration target speed generation unit 106 calculates the target deceleration completion position $x_b$ based on the current position and generates Equation (12) as the command speed transition pattern A2.

The deceleration target speed generation unit 106 generates the target speed transition pattern B2 which is a part of the target speed transition pattern B on the basis of a speed at each position of the command speed transition pattern A2 in Fig. 2 (step S5). The deceleration target speed generation unit 106 generates, for example, the target speed transition pattern B2 having a speed that is 5 kilometers per hour slower than the speed at each position of the command speed transition pattern A2.

The deceleration target speed generation unit 106 derives a polynomial indicating the second control transition pattern C2 which smoothly connects to the target speed transition pattern B2 after the prediction period of T seconds elapses (step S6). For example, if the speed v(t) is represented by the polynomial of a cubic function expressed by Equation (1), the deceleration target speed generation unit 106 receives the previously calculated target acceleration output by the minimum value selection unit 107 and performs an operation as shown in Equation (1) to Equation (3) and Equation (13) to Equation (20) described above. Then, the deceleration target speed generation unit 106 calculates the coefficients of $k_0$ to $k_3$ by solving simultaneous equations of Equation (17) to Equation (20).

The deceleration target speed generation unit 106 calculates an acceleration using the processing of step S6. The deceleration target speed generation unit 106 outputs the calculated acceleration to the minimum value selection unit 107.

The minimum value selection unit 107 receives the acceleration calculated by the upper speed limit target speed generation unit 105 and the acceleration calculated by the deceleration target speed generation unit 106. The minimum value selection unit 107 compares the magnitudes of the two received accelerations. The minimum value selection unit 107 sets the smallest one of the compared accelerations as a target acceleration ao (a target value of a current acceleration), and outputs the target acceleration ao to the upper speed limit target speed generation unit 105, the deceleration target speed generation unit 106, and the mass multiplication unit 108 (step S7). The minimum value selection unit 107 outputs zero as an initial value.

The mass multiplication unit 108 receives the target acceleration ao from the minimum value selection unit 107. The mass multiplication unit 108 multiplies the received target acceleration ao by the predetermined mass of the vehicle 10 (step S8). A result of the multiplication performed by the mass multiplication unit 108 shows the traction force pwr.

The mass multiplication unit 108 outputs the traction force pwr to the traction force restriction unit 109.

The traction force restriction unit 109 receives the traction force pwr from the mass multiplication unit 108. The traction force restriction unit 109 restricts the traction force input in a range between an upper limit and a lower limit determined on the basis of the performance of a motor (step S9). Specifically, the traction force restriction unit 109 compares the traction force pwr input from the mass multiplication unit 108 and the upper and lower limits showing the range of the traction force determined on the basis of the performance of a motor. Then, the traction force restriction unit 109 restricts the traction force pwr so that the traction force falls below the upper limit and exceeds the lower limit when the input traction force pwr exceeds the upper limit. In addition, the traction force restriction unit 109 restricts the traction force pwr so that the traction force pwr exceeds the lower limit and falls below the upper limit when the input traction force pwr falls below the lower limit of the traction force pwr. The traction force restriction unit 109 outputs the restricted traction force pwr to the motor command generation unit 110.

The motor command generation unit 110 receives a traction force pwr from the traction force restriction unit 109. The motor command generation unit 110 generates a motor command of the motor 103 on the basis of the input traction force pwr. For example, the motor command generation unit 110 generates a motor command for realizing torque corresponding to the traction force pwr input by the motor 103 (step S10).

The motor command generation unit 110 outputs the generated motor command to the motor 103 (step S11).

The motor 103 receives a motor command from the motor command generation unit 110. The motor 103 operates on the basis of the input motor command.

Here, the motor command received by the motor 103 from the motor command generation unit 110 is a motor command generated on the basis of the polynomial indicating a smaller value selected from a polynomial indicating the first control transition pattern C1 and a polynomial indicating the second control transition pattern C2. The polynomial indicating the first control transition pattern C1 is a polynomial indicating a pattern smoothly connecting to the target speed transition pattern B1 when the prediction period of T seconds elapses as shown in Fig. 2. In addition, the polynomial indicating the second control transition pattern C2 is a polynomial indicating a pattern smoothly connecting to the target speed transition pattern B2 when the prediction period of T seconds elapses as shown in Fig. 2. Due to this motor command, an abrupt acceleration of the vehicle 10 is less likely to happen and the riding comfort improves. In addition, the target speed transition pattern B1 or B2 corresponding to the motor command is a curve showing the fastest possible speed v(t) by improving safety with a slow speed so that an emergency brake is not applied to the ATP pattern A. For this reason, the traveling time of the vehicle 10 is not likely to be delayed. In addition, the automatic train driving apparatus 102 generates a motor command by predicting a situation after the elapse of the prediction period T. Therefore, the vehicle 10 is unlikely to go too fast due to a control delay with respect to the motor 103 and a speed tracking accuracy improves.

The processing performed by the automatic train driving apparatus 102 according to first embodiment of the present invention has been described above. In the automatic train driving apparatus 102 described above, when the ATP device 20 receives a notification that the vehicle 10 has approached a stop limit position from the ATP track antenna, the speed control unit 104 controls the speed deceleration of the vehicle 10 using the braking force of the regenerative brake in accordance with the speed of the vehicle 10 based on the target speed transition pattern B. The target speed transition pattern B is a pattern calculated using the brake force characteristic of the regenerative brake in the brake force characteristic indicating a relationship between the speed of the vehicle 10 and the decreasing speed thereof per unit time when the speed of the vehicle 10 is controlled in a deceleration manner with the maximum brake force of the regenerative brake. The speed control unit 104 controls deceleration in the speed of the vehicle 10 using braking means such as a mechanical brake rather than the regenerative brake when the speed of the vehicle 10 reaches a speed before the upper speed limit is reached.

Moreover, the speed control unit 104 acquires the upper speed limit v1 from the ATP device 20. The speed control unit 104 calculates the target speed transition pattern B of a speed lower than the acquired upper speed limit v1. Then, the speed control unit 104 calculates the control transition pattern B of the vehicle 10 at each processing cycle time shorter than a time until a target time so that a train speed coincides with the target speed transition pattern B after a predetermined target time based on a current time. The speed control unit 104 determines the acceleration of the vehicle 10 at a next timing on the basis of the calculated result.

In addition, the speed control unit 104 calculates a first target speed transition pattern B1 of travel at a fixed speed as the target speed transition pattern B lower than the upper speed limit v1. The speed control unit 104 calculates the second target speed transition pattern B2 of travel toward a stop limit position in a deceleration manner as a target speed transition pattern lower than the upper limit of the target speed transition pattern B1. The speed control unit 104 calculates the first target speed transition pattern of the vehicle 10 at a next timing when the train speed coincides with the first target speed transition pattern B1 after a predetermined target time based on a current time. The speed control unit 104 calculates the second target speed transition pattern of the vehicle 10 at a next timing when the train speed coincides with the second target speed transition pattern B2 after a predetermined time based on a current time. Then, the speed control unit 104 compares the accelerations of the first control transition pattern and the second control transition pattern in a next control step. The speed control unit 104 sets the lower acceleration as the acceleration of the vehicle 10.

In addition, the speed control unit 104 calculates effective torque on the basis of the acceleration of the vehicle 10 and the mass of the vehicle 10.

In addition, the speed control unit 104 controls the speed of the vehicle 10 using at least one of braking means other than the regenerative brake and the regenerative brake when the acceleration is a negative acceleration.

In addition, the speed control unit 104 acquires information on the upper speed limit v1 and the deceleration $\beta$ from the ATP device 20. The speed control unit 104 calculates a current position on the basis of the acquired information on the upper speed limit v1 and the deceleration $\beta$.

In this manner, the vehicle 10 operates according to a motor command generated on the basis of a polynomial indicating the smaller value among the polynomial indicating the first control transition pattern C1 and the polynomial indicating the second control transition pattern C2. The polynomial indicating the first control transition pattern C1 is a polynomial indicating a pattern smoothly connecting to the target speed transition pattern B1 at the time when the prediction period of T seconds elapses. In addition, the polynomial indicating the second control transition pattern C2 is a polynomial indicating a pattern smoothly connecting the target speed transition pattern B2 at the time when the prediction period of T seconds elapses. For this reason, an abrupt acceleration is less likely to occur and the riding comfort of the vehicle 10 improves. Moreover, the vehicle 10 operates according to a motor command generated on the basis of the target speed transition pattern B indicating the fastest possible speed v(t) possible by improving safety with a slow speed so that an emergency brake is not applied to the vehicle having the ATP pattern A. Therefore, the traveling time of the vehicle 10 is not likely to be delayed. In addition, the vehicle 10 operates according to a motor command generated by the automatic train driving apparatus 102 by predicting a situation after the prediction period of T seconds elapses. For this reason, the vehicle 10 is unlikely to go too fast due to a control delay with respect to the motor 103, and has an improved speed tracking accuracy.

<Second embodiment>

Next, a vehicle 10a according to the second embodiment of the present invention will be described.

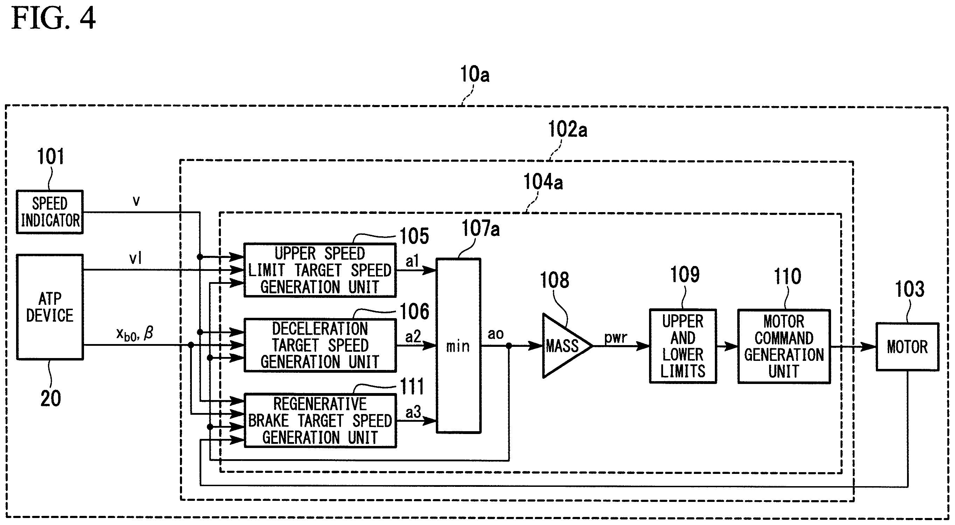

Fig. 4 is a diagram which shows an example of the vehicle 10a according to the second embodiment of the present invention.

As shown in Fig. 4, the vehicle 10a according to the second embodiment includes a speed indicator 101, an automatic train driving apparatus 102a, a motor 103, and an ATP device 20.

The vehicle 10a according to the second embodiment is different from the vehicle 10 according to the first embodiment in that a speed control unit 104a according to the second embodiment includes a regenerative brake target speed generation unit 111. In addition, the vehicle 10a according to the second embodiment is different from the vehicle 10 according to the first embodiment in that a minimum value selection unit 107a according to the second embodiment outputs the smallest one among accelerations calculated by the upper speed limit target speed generation unit 105, the deceleration target speed generation unit 106, and the regenerative brake target speed generation unit 111.

The automatic train driving apparatus 102a includes a speed control unit 104a.

The speed control unit 104a includes an upper speed limit target speed generation unit 105, a deceleration target speed generation unit 106, a minimum value selection unit 107a, a mass multiplication unit 108, a traction force restriction unit 109, a motor command generation unit 110, and a regenerative brake target speed generation unit 111.

The regenerative brake target speed generation unit 111 calculates an acceleration a3 of the vehicle 10a on the basis of a speed v, a deceleration $\beta$, a position, a previously calculated target acceleration, and information on the motor 103.

The minimum value selection unit 107a compares an acceleration a1 calculated by the upper speed limit target speed generation unit 105, an acceleration a2 calculated by the deceleration target speed generation unit 106, and an acceleration a3 calculated by the regenerative brake target speed generation unit 111. The minimum value selection unit 107a outputs the smallest acceleration.

With each of the functional units including the upper speed limit target speed generation unit 105, the deceleration target speed generation unit 106, the minimum value selection unit 107, the mass multiplication unit 108, the traction force restriction unit 109, the motor command generation unit 110, and the regenerative brake target speed generation unit 111, the speed control unit 104a controls the deceleration of the speed of the vehicle 10a using the braking force of the regenerative brake in accordance with the speed of the vehicle 10a based on the ideal target speed transition pattern B when the ATP device 20 receives a notification indicating that the vehicle 10a has approached the stop limit position from the ATP track antenna and the vehicle 10a travels at a speed equal to or higher than a brake force characteristic decreasing speed at which the brake force of the regenerative brake decreases in the brake force characteristic indicating a relationship between the speed of the vehicle IOa and the decreasing speed thereof per unit time when the speed of the vehicle 10a is controlled in a deceleration manner with the maximum brake force of the regenerative brake. The ideal target speed transition pattern B is calculated using the brake force characteristic of the regenerative brake in accordance with the speed of the vehicle 10a.

Next, the characteristics of a regenerative brake of a general motor will be described.

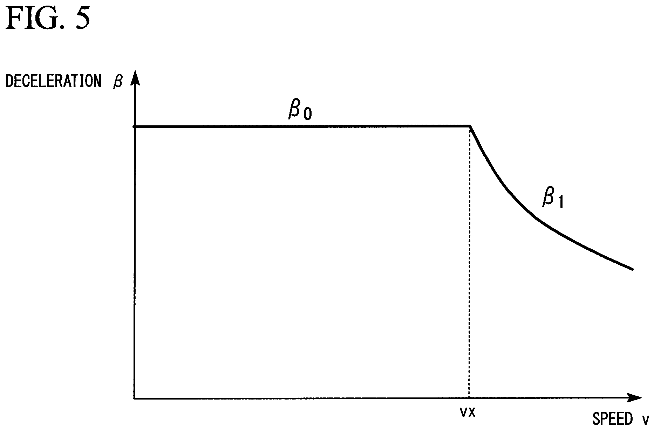

Fig. 5 is a diagram which shows an example of the characteristics of a regenerative brake of a general motor.

The horizontal axis of Fig. 5 represents speed v, and the vertical axis represents a deceleration $\beta$ at a corresponding speed. As shown in Fig. 5, when a general motor exceeds a certain speed $v_x$, the deceleration $\beta$ (a rate of decrease in speed per unit time) per unit time decreases when braking is applied with a maximum force.

Next, the target speed transition pattern B generated by the automatic train driving apparatus 102a according to the second embodiment of the present invention will be described.

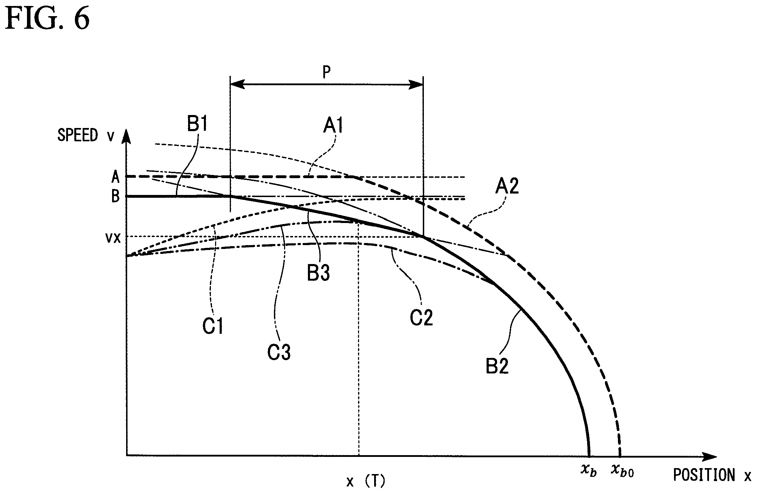

Fig. 6 is a diagram which shows an example of the target speed transition pattern B generated by the automatic train driving apparatus 102a.

The horizontal axis of Fig. 6 represents a position x on a trajectory based on the current position of the train, and the vertical axis represents the speed v of the vehicle at the position x. In addition, $x_{b0}$ indicates a deceleration completion position which the ATP device 20 receives from the ATP track antenna. For example, the deceleration completion position $x_{b0}$ is a position before a predetermined distance from the end of a train traveling forward when the train is congested, a position before a stop indication signal, or the like.

A command speed transition pattern A1, a command speed transition pattern A2, a target speed transition pattern B1, and a target speed transition pattern B2 shown in Fig. 6 are the same as in Fig. 2.

A target speed transition pattern B3 shown in Fig. 6 indicates the speed at each position on the trajectory based on the current position of the train that is slower than the command speed transition pattern A1 and the command speed transition pattern A2. Here, the target speed transition pattern B3 is a pattern newly calculated by replacing the deceleration β of a portion equal to or higher than the speed $v_x$ in the speed transition pattern A2 with a deceleration $β_1$ based on a fact that the deceleration $β_1$ of a case in which the speed of the vehicle 10 is a speed equal to or higher than the speed $v_x$ falls more than a deceleration $β_0$ of a case in which the speed of the vehicle 10a is a speed lower than the speed $v_x$. The target speed transition pattern B3 is one of ideal target speed patterns which can be tracked at the speed of the vehicle 10a using the braking force of only the regenerative brake calculated using the brake force characteristic of the regenerative brake. The target speed transition pattern B includes the target speed transition pattern B3 and indicates the target speed transition patterns (B1 to B3). If the speed of the vehicle 10a is controlled on the basis of the target speed transition pattern B, even when the vehicle 10a travels at a fast speed equal to or higher than $v_x$, it is possible to cause the speed of the vehicle 10a to track the target speed transition pattern B using the braking force of only the regenerative brake. A traveling section of the vehicle 10a calculated when the vehicle travels in the target speed transition pattern B3 is referred to as a deceleration falling section P.

Here, the deceleration $β=β_1$ can be approximated as the following Equation (21).

$$\beta = \beta_1 = Av(t) + B \cdots (21)$$

Therefore, an acceleration a(T) can be expressed by the following Equation (22) by substituting Equation (21) into Equation (15).

$$a(T) = -Av(T) - B \cdots (22)$$

In addition, the position x(T) of the vehicle 10a after the prediction period of T seconds elapses can be represented by the following Equation (23) obtained by substituting Equation (21) into Equation (16).

$$x(T) = x_b - [v(T)^2 \div 2(Av(T) + B)] \cdots (23)$$

Moreover, if the current speed of the vehicle 10a is set to $v_0$, the current acceleration of the vehicle 10a is set to $a_0$, the speed of the vehicle 10a at the time t is represented as v(t), and the acceleration of the vehicle 10a at the time t is represented as a(t), the following Equations (24) and (25) are obtained.

$$v(0) = v_0 \cdots (24)$$

$$a(0) = a_0 \cdots (25)$$

The regenerative brake target speed generation unit 111 calculates coefficients of $k_0$ to $k_3$ by solving simultaneous equations of Equation (22) to Equation (25). Then, the regenerative brake target speed generation unit 111 calculates a third control transition pattern C3 by substituting $k_0$ to $k_3$ into Equation (3).

The deceleration β in the example described above is obtained by a linear approximation as shown in Equation (21), but a complex equation may also be used as the deceleration β.

Next, processing performed by the automatic train driving apparatus 102a according to the second embodiment will be described.

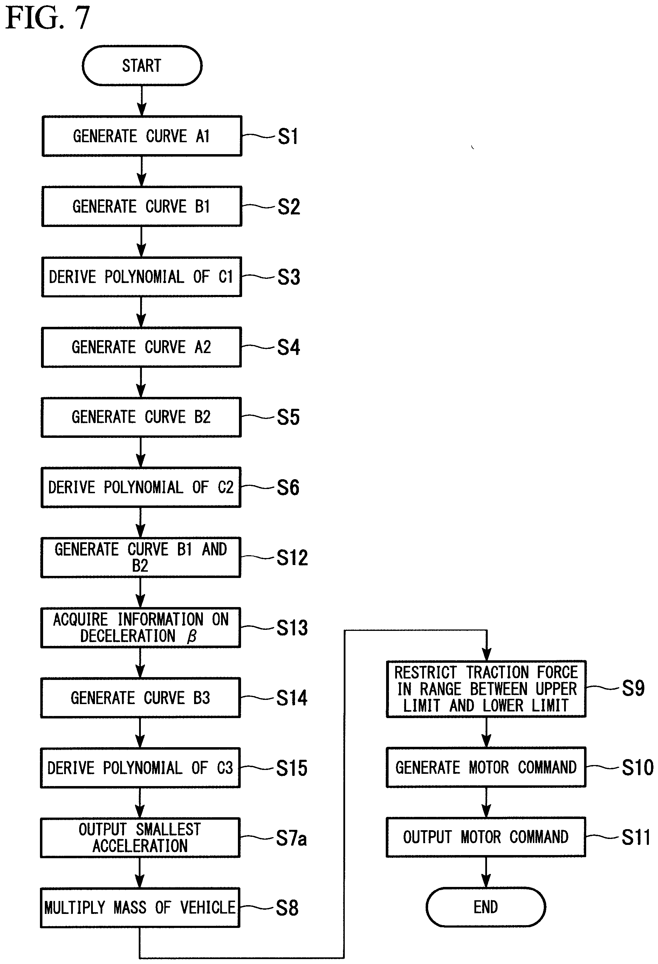

Fig. 7 is a diagram which shows an example of the processing flow of the automatic train driving apparatus 102a according to the second embodiment.

Processing of the speed control unit 104a according to the second embodiment is different from the processing of the speed control unit 104 according to the first embodiment in that the regenerative brake target speed generation unit 111 performs processing of step S12 to step S14 and the minimum value selection unit 107a performs processing of step S7a.

Here, the processing of step S12 to step S14 and processing of step S7a will be described.

The regenerative brake target speed generation unit 111 generates the target speed transition pattern B1 and the target speed transition pattern B2 shown in Fig. 2 in the same manner as the upper speed limit target speed generation unit 105 and the deceleration target speed generation unit 106 (step S12). The regenerative brake target speed generation unit 111 may acquire the target speed transition pattern B1 from the upper speed limit target speed generation unit 105, and acquire the target speed transition pattern B2 from the deceleration target speed generation unit 106.

The regenerative brake target speed generation unit 111 acquires information on the deceleration β from the motor 103 (step S13).

The regenerative brake target speed generation unit 111 generates the target speed transition pattern B3 smoothly connecting to the target speed transition pattern B1 and the target speed transition pattern B2 after the prediction period of T seconds elapses (step S14). For example, the regenerative brake target speed generation unit 111 substitutes the acquired deceleration β into Equation (15) and Equation (16), and calculates the acceleration $a(T)$ and the position $x(T)$ after the prediction period of T seconds elapses. For example, when the deceleration β is represented by Equation (21), the regenerative brake target speed generation unit 111 calculates the acceleration $a(T)$ after the prediction period of T seconds elapses as shown in Equation (22). The regenerative brake target speed generation unit 111 calculates the position $x(T)$ after the prediction period of T seconds elapses as shown in Equation (23). The regenerative brake target speed generation unit 111 calculates the current speed $v(0)$ as shown in Equation (24). The regenerative brake target speed generation unit 111 calculates the acceleration $a(0)$ as shown in Equation (25). The regenerative brake target speed generation unit 111 calculates the coefficients of $k_0$ to $k_3$ by solving simultaneous equations of Equation (22) to Equation (25).

The regenerative brake target speed generation unit 111 derives a polynomial indicating the target speed transition pattern B3 using the processing of step S14. The regenerative brake target speed generation unit 111 calculates an acceleration using the processing of step S14. The regenerative brake target speed generation unit 111 outputs the calculated acceleration to the minimum value selection unit 107a. The regenerative brake target speed generation unit 111 derives a polynomial indicating the third control transition pattern C3 by substituting $k_0$ to $k_3$ into Equation (3) (step S15).

The minimum value selection unit 107a receives an acceleration calculated by the upper speed limit target speed generation unit 105, an acceleration calculated by the deceleration target speed generation unit 106, and an acceleration calculated by the target speed generation unit 111. The minimum value selection unit 107a compares the magnitudes of the three input accelerations when the prediction period T elapses. The minimum value selection unit 107a selects the smallest acceleration among the compared accelerations as a target acceleration ao (a target value of a current acceleration) and outputs the target acceleration ao to the upper speed limit target speed generation unit 105, the deceleration target speed generation unit 106, the mass multiplication unit 108, and the regenerative brake target speed generation unit 111 (step S7a). The minimum value selection unit 107 outputs zero as an initial value.

The processing performed by the automatic train driving apparatus 102a according to the second embodiment of the present invention has been described. In the automatic train driving apparatus 102a described above, the regenerative brake target speed generation unit 111 calculates the acceleration of the vehicle 10a on the basis of the speed v, the deceleration β, a position, a previously calculated target acceleration, and information on a regenerative brake of the motor 103. The minimum value selection unit 107a compares the acceleration calculated by the upper speed limit target speed generation unit 105, the acceleration calculated by the deceleration target speed generation unit 106, and the acceleration calculated by the regenerative brake target speed generation unit 111, and outputs the smallest acceleration. Then, with each of the functional units including the upper speed limit target speed generation unit 105, the deceleration target speed generation unit 106, the minimum value selection unit 107, the mass multiplication unit 108, the traction force restriction unit 109, the motor command generation unit 110, and the regenerative brake target speed generation unit 111, the speed control unit 104a controls the deceleration of the speed of the vehicle 10a using the braking force of the regenerative brake in accordance with the speed of the vehicle 10a based on the ideal target speed transition pattern B when the ATP device 20 receives a notification indicating that the vehicle 10a has approached the stop limit position from the ATP track antenna and the vehicle 10a travels at a speed equal to or faster than a brake force characteristic decreasing speed at which the brake force characteristic of the regenerative brake decreases by having the brake force characteristic decreasing speed or higher in the brake force characteristic indicating a relationship between the speed of the vehicle 10a and the decreasing speed thereof per unit time when the speed of the vehicle 10a is controlled in a deceleration manner with the maximum brake force of the regenerative brake. The ideal target speed transition pattern B is calculated using the brake force characteristic of the regenerative brake in accordance with the speed of the vehicle 10a.

In this manner, the vehicle 10a operates according to a motor command generated on the basis of the polynomial indicating the smallest value among the polynomial indicating the first control transition pattern C1 smoothly connecting to the target speed transition pattern B1 after the prediction period of T seconds elapses, the polynomial indicating the second control transition pattern C2 smoothly connecting to the target speed transition pattern B2, and the polynomial indicating the third control transition pattern C3 smoothly connecting to the target speed transition pattern B3 using only the regenerative brake of the motor 103. For this reason, the abrupt acceleration is less likely to occur and the riding comfort of the vehicle 10 improves. In addition, the vehicle 10a operates according to a motor command generated on the basis of the target speed transition pattern B indicating the fastest possible speed v(t) by improving safety with a slow speed so that an emergency brake is not applied to the ATP pattern A using only the regenerative brake of the motor 103. Therefore, the traveling time of the vehicle 10a is not easily delayed. In addition, the vehicle 10a operates according to a motor command generated by the automatic train driving apparatus 102a by predicting a situation after the prediction period of T seconds elapses using only the regenerative brake of the motor 103. Accordingly, the vehicle 10a is unlikely to go too fast due to a control delay with respect to the motor 103, and has an improved speed tracking accuracy.

<Third embodiment>

Next, a vehicle 10b according to a third embodiment of the present invention will be described.

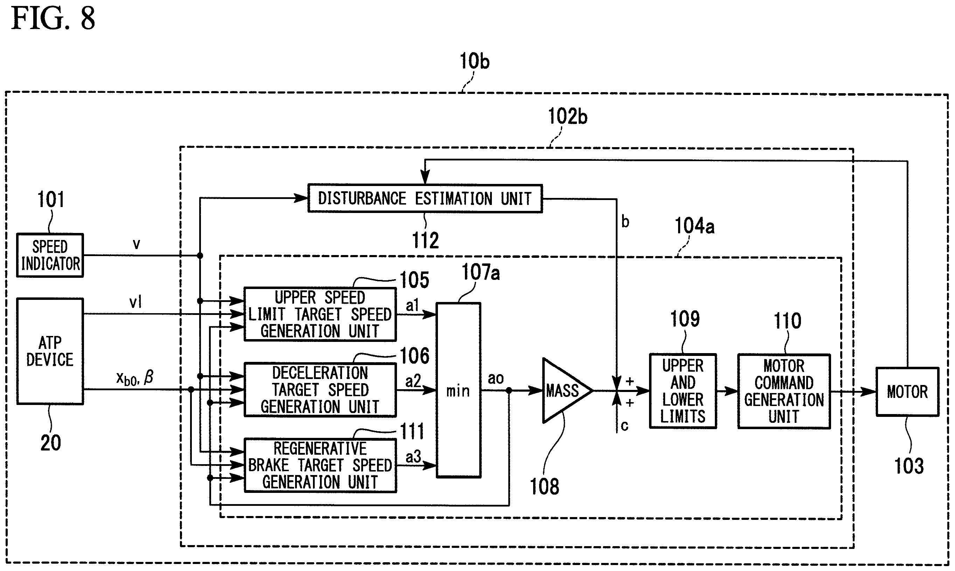

Fig. 8 is a diagram which shows an example of the vehicle 10b according to the third embodiment of the present invention.

As shown in Fig. 8, the vehicle 10b according to the third embodiment includes a speed indicator 101, an automatic train driving apparatus 102b, a motor 103, and an ATP device 20.

The vehicle 10b according to the third embodiment is different from the vehicle 10a according to the second embodiment in that the automatic train driving apparatus 102b according to the third embodiment includes a disturbance estimation unit 112.

The automatic train driving apparatus 102b includes a speed control unit 104a and the disturbance estimation unit 112.

The disturbance estimation unit 112 estimates the running resistance c on the basis of speed and effective torque which indicates torque actually generated by the motor 103. The disturbance estimation unit 112 outputs an estimated running resistance b to the traction force restriction unit 109.

Next, a disturbance estimation method performed by the disturbance estimation unit 1112 according to the third embodiment of the present invention will be described.

The disturbance estimation method performed by the disturbance estimation unit 112 is, for example, a method of calculating using the following Equation (26).

$$\text{(Running resistance)} = \text{(Effective torque)} - \text{(Current speed - Previous speed)} \,/$$

$$\Delta T \times \text{(Vehicle mass)} \ldots (26)$$

The disturbance estimation unit 112 acquires the effective torque from the motor 103. The disturbance estimation unit 112 acquires a speed from the speed indicator 101 at a cycle of a minute time $\Delta T$. The disturbance estimation unit 112 calculates the running resistance b by subtracting a value obtained by dividing the speed change during the minute time $\Delta T$ by the minute time $\Delta T$ and multiplying the result by the vehicle mass from the effective torque using Equation (26). The disturbance estimation unit 112 cancels a disturbance (running resistance c) due to the running resistance b.

Next, processing performed by the automatic train driving apparatus 102b according to the third embodiment will be described.

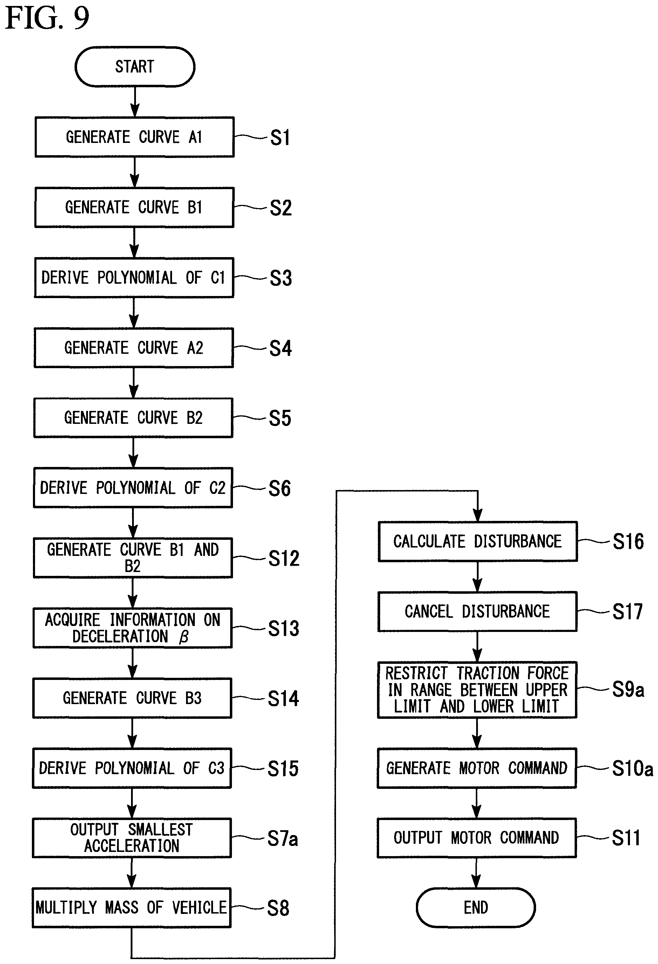

Fig. 9 is a diagram which shows an example of the processing flow of the automatic train driving apparatus 102b according to the third embodiment.

The processing performed by the automatic train driving apparatus 102b according to the third embodiment is different from the processing of the automatic train driving apparatus 102a according to the second embodiment in that the disturbance estimation unit 112 performs the processing of step S16 and step S17, the traction force restriction unit 109 performs the processing of step S9a, and the motor command generation unit 110 performs the processing of step

S10a.

Here, only the processing of step S16, step S17, step S9a, and step S10a will be described.

The mass multiplication unit 108 multiplies the input target acceleration ao by the mass of the vehicle 10b in processing of step S8. The result of the multiplication performed by the mass multiplication unit 108 shows the traction force pwr.

The mass multiplication unit 108 outputs the traction force pwr to the traction force restriction unit 109.

The disturbance estimation unit 112 estimates the running resistance c on the basis of a speed and effective torque which indicates torque actually generated by the motor 103 (step S16). The disturbance estimation unit 112 outputs the estimated running resistance b to the traction force restriction unit 109.

The traction force restriction unit 109 receives the traction force pwr from the mass multiplication unit 108. The traction force restriction unit 109 receives the running resistance b from the disturbance estimation unit 112. The traction force restriction unit 109 adds the disturbance, the traction force pwr, and the running resistance b. Due to the addition performed by the traction force restriction unit 109, the disturbance is canceled by the running resistance b (step S17). The traction force restriction unit 109 restricts the traction force pwr in the range between the upper limit and the lower limit determined based on the performance of a motor (step S9a). The traction force restriction unit 109 outputs the traction force pwr to the motor command generation unit 110.

The motor command generation unit 110 receives the traction force pwr from the traction force restriction unit 109. The motor command generation unit 110 generates a motor command of the motor 103 on the basis of the input traction force pwr (step S10a).

A disturbance estimation method performed by the disturbance estimation unit 112 may be a method using, for example, a disturbance estimator.

For example, when the running resistance c which is disturbance in the speed control unit 104a cannot be directly measured, the disturbance estimation unit 112 is configured to include a mass multiplication unit model obtained by modeling the characteristics of the mass multiplication unit 108, and a motor command generation inverse model obtained by modeling the information processing of the traction force restriction unit 109 and the motor command generation unit 110 in a reverse direction. The mass multiplication unit model included in the disturbance estimation unit 112 receives the target acceleration ao from the minimum value selection unit 107a. The motor command generation inverse model receives the effective torque from the motor 103. The disturbance estimation unit 112 calculates the running resistance c which is a disturbance as the running resistance b by subtracting the traction force obtained by multiplying the target acceleration output by the mass multiplication unit model by the mass of the vehicle 10b from the traction force contributing to the effective torque output by the motor command generation inverse model.

The disturbance estimation unit 112 outputs the running resistance b to the upper speed limit target speed generation unit 105, the deceleration target speed generation unit 106, and the regenerative brake target speed generation unit 111. Each of the upper speed limit target speed generation unit 105, the deceleration target speed generation unit 106, and the regenerative brake target speed generation unit 111 receives the running resistance b from the disturbance estimation unit 112. Each of the upper speed limit target speed generation unit 105, the deceleration target speed generation unit 106, and the regenerative brake target speed generation unit 111 corrects the target speed transition pattern B to cancel disturbance on the basis of the input running resistance b.

As described above, the disturbance estimation unit 112 estimates disturbance on the basis of a modern control theory, and each of the upper speed limit target speed generation unit 105, the deceleration target speed generation unit 106, and the regenerative brake target speed generation unit 111 corrects the target speed transition pattern B to cancel disturbance, and thereby the disturbance may be cancelled.

The processing performed by the automatic train driving apparatus 102b according to the third embodiment of the present invention has been described above. In the automatic train driving apparatus 102b described above, the disturbance estimation unit 112 estimates a running resistance c on the basis of a speed and the effective torque which indicates torque actually generated by the motor 103. The motor command generation unit 110 generates a motor command on the basis of the traction force which cancels disturbance using the running resistance b.

In this manner, the vehicle 10b can accurately correct the running resistance c. Therefore, the speed following performance of the vehicle 10b is improved. In addition, the vehicle 10b can estimate a control error due to the weight of the vehicle 10b as a part of the running resistance c and cancel it. For this reason, the vehicle 10b can reduce the labor and cost of measuring the weight using a train load sensor and correcting a control error.

In the embodiments described above, the automatic train driving apparatuses 102, 102a, and 102b are described as apparatuses which acquire an ATP pattern A from the ATP device 20, calculate the target speed transition pattern B on the basis of the acquired ATP pattern A, and calculate a final control transition pattern. However, the automatic train driving apparatuses 102, 102a, and 102b are not limited thereto. For example, the ATP device 20 may receive the target speed transition pattern B from the ATP track antenna. The ATP device 20 may transmit the target speed transition pattern B received from the ATP track antenna to the automatic train driving apparatuses 102. 102a, and 102b. In this case, the automatic train driving apparatuses 102, 102a, and 102b may be apparatuses which can acquire the target speed transition pattern B from the ATP device 20.

A processing flow in one embodiment of the present invention may have a changed order of processing in a range in which appropriate processing is performed.

The embodiments of the present invention have been described, and the speed control units 104 and 104a, the automatic train driving apparatuses 102, 102a, and 102b, and the ATP device 20 described above have a computer system therein. In this case, a process of the processing described above is stored in a computer-readable recording medium in a program form, and the processing is performed by reading and executing the program by a computer. Here, the computer-readable recording medium is a magnetic disk, a magneto-optical disc, a CD-ROM, a DVD-ROM, a semiconductor memory, and the like. In addition, this computer program may be delivered to a computer through a communication line, and the computer which receives this delivery may execute this program.

Moreover, the program may realize a portion of the functions described above. Furthermore, the program may also be a file, a so-called difference file (difference program), which can realize the functions described above in combination with a program recorded in a computer system.

[Industrial Applicability]

According to the automatic train driving apparatus, the automatic train control method, and the program described above, it is possible to improve the riding comfort of an automatic train and to shorten a traveling time.

[Reference Signs List]

    10, 10a, 10b Vehicle
    20 Automatic train protection (ATP) device
    101 Speed indicator
    102, 102a, 102b Automatic train driving apparatus
    103 Motor
    104, 104a Speed control unit
    105 Upper speed limit target speed generation unit
    106 Deceleration target speed generation unit
    107, 107a Minimum value selection unit
    108 Mass multiplication unit
    109 Traction force restriction unit
    110 Motor command generation unit
    111 Regenerative brake target speed generation unit
    112 Disturbance estimation unit

**Claims**

1.  An automatic train driving apparatus provided in a vehicle comprising:
    a speed control unit (104) that is configured to:

        acquire an upper speed limit (vl) from an ATP device, the upper speed limit (vl) being a speed at which a mechanical brake is used for braking operation;
        calculate a target speed pattern (B) including a first target speed pattern (B1), a second target speed pattern (B2), and a third target speed pattern (B3),

            the first target speed pattern (B1) indicating a relationship between a position of the vehicle and a speed of the vehicle at each position when traveling at a fixed speed, and being lower than the upper speed limit (v1),
            the second target speed pattern (B2) indicating a relationship between a position of the vehicle and a speed of the vehicle at each position when a decrease of a speed of the vehicle toward a stop limit position is operated by the maximum braking of only a regenerative brake, and being lower than the upper speed limit (vl),
            the third target speed pattern (B3) indicating a relationship between a position of the vehicle and a speed of the vehicle at each position when a decrease of a speed of the vehicle is operated by only the regenerative brake at a speed equal or higher than a speed (vx) at which a braking force of the regenerative brake decreases, intersecting with the first target speed pattern (B1) and the second target speed pattern (B2), and being lower than the upper speed limit (vl);

calculate a first control transition pattern (C1) of the vehicle, a second control transition pattern (C2) of the vehicle, and a third control transition pattern (C3) of the vehicle,

the first control transition pattern (C1) indicating a relationship between a position of the vehicle and a speed of the vehicle at each position so as to coincide the speed of the vehicle with a speed of the vehicle of the first target speed pattern (B1) at a time after the elapse of a predetermined first time passing from a current time,

the second control transition pattern (C2) indicating a relationship between a position of the vehicle and a speed of the vehicle at each position so as to coincide the speed of the vehicle with a speed of the vehicle of the second target speed pattern (B2) at a time after the elapse of the predetermined second time passing from the current time,

the third control transition pattern (C3) that indicates a relationship between a position of the vehicle and a speed of the vehicle at each position so as to coincide the speed of the vehicle with a speed of the vehicle of the third target speed pattern (B3) at a time after the elapse of a predetermined third time passing from the current time;

calculate a first acceleration of the vehicle when a predetermined time elapses from the current time on the basis of the relationship between a position of the vehicle and a speed of the vehicle at each position indicated by the first control transition pattern (C1);

calculate a second acceleration of the vehicle when a predetermined time elapses from the current time on the basis of the relationship between a position of the vehicle and a speed of the vehicle at each position indicated by the second control transition pattern (C2);

calculate a third acceleration of the vehicle when a predetermined time elapses from the current time on the basis of the relationship between a position of the vehicle and a speed of the vehicle at each position indicated by the third control transition pattern (C3);

compare the first acceleration, the second acceleration, and the third acceleration, and set the lowest acceleration from among the first acceleration, the second acceleration, and the third acceleration as the acceleration of the vehicle; and

control a decrease of the speed of the vehicle using braking force of only the regenerative brake in accordance with the speed of the vehicle based on the calculated target speed pattern (B) when a notification indicating that the vehicle has approached the stop limit position is received from the ATP device and when the vehicle travels at a speed equal to or higher than the speed (vx) at which the braking force of the regenerative brake decreases.

2. The automatic train driving apparatus according to Claim 1,
wherein the speed control unit (104) is configured to calculate effective torque on the basis of the acceleration of the vehicle and the mass of the vehicle.

3. The automatic train driving apparatus according to Claim 2,
wherein the speed control unit (104) is configured to
control the speed of the vehicle using at least one of braking means other than the regenerative brake and the regenerative brake when the acceleration is a negative acceleration.

4. The automatic train driving apparatus according to Claim 2 or 3, further comprising:
a disturbance estimation unit (112) that is configured to estimate a running resistance on the basis of the effective torque and a speed change.

5. An automatic train control method comprising the steps of:

acquiring an upper speed limit (vl) from an ATP device, the upper speed limit (vl) being a speed at which a mechanical brake is used for braking operation;

calculating a target speed pattern (B) including a first target speed pattern (B1), a second target speed pattern (B2), and a third target speed pattern (B3),

the first target speed pattern (B1) indicating a relationship between a position of the vehicle and a speed of the vehicle at each position when traveling at a fixed speed, and being lower than the upper speed limit (v1), the second target speed pattern (B2) indicating a relationship between a position of the vehicle and a speed of the vehicle at each position when a decrease of a speed of the vehicle toward a stop limit position is operated by the maximum braking of only a regenerative brake, and being lower than the upper speed limit (vl),

the third target speed pattern (B3) indicating a relationship between a position of the vehicle and a speed of the vehicle at each position when a decrease of a speed of the vehicle is operated by only the regenerative brake at a speed equal or higher than a speed (vx) at which a braking force of the regenerative brake decreases, intersecting with the first target speed pattern (B1) and the second target speed pattern (B2), and being lower than the upper speed limit (vl);

calculating a first control transition pattern (C1) of the vehicle, a second control transition pattern (C2) of the vehicle, a third control transition pattern (C3) of the vehicle,

the first control transition pattern (C1) indicating a relationship between a position of the vehicle and a speed of the vehicle at each position so as to coincide the speed of the vehicle with a speed of the vehicle of the first target speed pattern (B1) at a time after the elapse of a predetermined second time passing from a current time,

the second control transition pattern (C2) indicating a relationship between a position of the vehicle and a speed of the vehicle at each position so as to coincide the speed of the vehicle with a speed of the vehicle of the second target speed pattern (B2) at the time after the elapse of the predetermined second time passing from the current time,

the third control transition pattern (C3) that indicates a relationship between a position of the vehicle and a speed of the vehicle at each position so as to coincide the speed of the vehicle with a speed of the vehicle of the third target speed pattern (B3) at a time after the elapse of a predetermined third time passing from the current time;

calculating a first acceleration of the vehicle when a predetermined time elapses from the current time on the basis of the relationship between a position of the vehicle and a speed of the vehicle at each position indicated by the first control transition pattern (C1);

calculating a second acceleration of the vehicle when a predetermined time elapses from the current time on the basis of the relationship between a position of the vehicle and a speed of the vehicle at each position indicated by the second control transition pattern (C2);

calculating a third acceleration of the vehicle when a predetermined time elapses from the current time on the basis of the relationship between a position of the vehicle and a speed of the vehicle at each position indicated by the third control transition pattern (C3);

comparing the first acceleration, the second acceleration, and the third acceleration, and setting the lowest acceleration from among the first acceleration, the second acceleration, and the third acceleration as the acceleration of the vehicle; and

control decrease of the speed of the vehicle using braking force of only the regenerative brake in accordance with the speed of the vehicle based on the calculated target speed pattern (B) when a notification indicating that the vehicle has approached the stop limit position is received from the ATP device and when the vehicle travels at a speed equal to or higher than the speed (vx) at which the braking force of the regenerative brake decreases.

6. A program comprising instructions which, when the program is executed by a computer, causes the computer to carry out the method of Claim 5.


**Patentansprüche**

1. Ein automatisches Zuglenkungsgerät in einem Fahrzeug mit
   eine Geschwindigkeitssteuereinheit (104), die so konfiguriert zum;
   Erhalten einer oberen Geschwindigkeitsgrenze (v1) von einer ATP-Vorrichtung, wobei die obere Geschwindigkeitsgrenze (v1) eine Geschwindigkeit ist, bei der eine mechanische Bremse für den Bremsvorgang verwendet wird;
   Berechnen eines Zielgeschwindigkeitsmusters (B), das ein erstes Zielgeschwindigkeitsmuster (B1), ein zweites Zielgeschwindigkeitsmuster (B2) und ein drittes Zielgeschwindigkeitsmuster (B3) umfasst, wobei

das erste Zielgeschwindigkeitsmuster (B1) eine Beziehung zwischen einer Position des Fahrzeugs und einer Geschwindigkeit des Fahrzeugs an jeder Position angibt, wenn mit einer festen Geschwindigkeit gefahren wird, und niedriger als die obere Geschwindigkeitsgrenze (v1) ist,

das zweite Zielgeschwindigkeitsmuster (B2) eine Beziehung zwischen einer Position des Fahrzeugs und einer Geschwindigkeit des Fahrzeugs an jeder Position anzeigt, wenn eine Verringerung einer Geschwindigkeit des Fahrzeugs in Richtung einer Stoppgrenzposition durch die maximale Abbremsung nur einer regenerativen Bremse betätigt wird, und die niedriger als die obere Geschwindigkeitsgrenze (v1) ist,

das dritte Zielgeschwindigkeitsmuster (B3) eine Beziehung zwischen einer Position des Fahrzeugs und einer Geschwindigkeit des Fahrzeugs an jeder Position anzeigt, wenn eine Verringerung einer Geschwindigkeit des Fahrzeugs nur durch die regenerative Bremse bei einer Geschwindigkeit gleich oder höher als einer Geschwindigkeit (vx), bei der eine Bremskraft der regenerativen Bremse abnimmt, betätigt wird, wobei es sich mit dem ersten Zielgeschwindigkeitsmuster (B1) und dem zweiten Zielgeschwindigkeitsmuster (B2) schneidet und niedriger als die obere Geschwindigkeitsgrenze (vl) ist;

Berechnen eines ersten Steuerübergangsmusters (C1) des Fahrzeugs, eines zweiten Steuerübergangsmuster (C2) des Fahrzeugs und eines dritten Steuerübergangsmuster (C3) des Fahrzeugs, wobei

das erste Steuerübergangsmuster (C1) eine Beziehung zwischen einer Position des Fahrzeugs und einer Geschwindigkeit des Fahrzeugs an jeder Position anzeigt, so dass die Geschwindigkeit des Fahrzeugs mit einer Geschwindigkeit des Fahrzeugs des ersten Zielgeschwindigkeitsmusters (B1) zu einem Zeitpunkt nach dem Verstreichen einer vorbestimmten ersten Zeit nach einer aktuellen Zeit übereinstimmt,

das zweite Steuerübergangsmuster (C2) eine Beziehung zwischen einer Position des Fahrzeugs und einer Geschwindigkeit des Fahrzeugs an jeder Position anzeigt, so dass die Geschwindigkeit des Fahrzeugs mit einer Geschwindigkeit des Fahrzeugs des zweiten Zielgeschwindigkeitsmusters (B2) zu einem Zeitpunkt nach dem Verstreichen der vorbestimmten zweiten Zeit nach der aktuellen Zeit übereinstimmt,

das dritte Steuerübergangsmuster (C3), das eine Beziehung zwischen einer Position des Fahrzeugs und einer Geschwindigkeit des Fahrzeugs an jeder Position anzeigt, so dass die Geschwindigkeit des Fahrzeugs mit einer Geschwindigkeit des Fahrzeugs des dritten Zielgeschwindigkeitsmusters (B3) zu einem Zeitpunkt nach dem Verstreichen einer vorbestimmten dritten Zeit nach der aktuellen Zeit übereinstimmt;

Berechnen einer ersten Beschleunigung des Fahrzeugs nach Ablauf einer vorbestimmten Zeit nach der aktuellen Zeit auf der Grundlage der Beziehung zwischen einer Position des Fahrzeugs und einer Geschwindigkeit des Fahrzeugs an jeder durch das erste Steuerübergangsmuster (C1) angegebenen Position;

Berechnen einer zweiten Beschleunigung des Fahrzeugs nach Ablauf einer vorbestimmten Zeit nach der aktuellen Zeit auf der Grundlage der Beziehung zwischen einer Position des Fahrzeugs und einer Geschwindigkeit des Fahrzeugs an jeder durch das zweite Steuerübergangsmuster (C2) angegebenen Position;

Berechnen einer dritten Beschleunigung des Fahrzeugs nach Ablauf einer vorbestimmten Zeit nach der aktuellen Zeit auf der Grundlage der Beziehung zwischen einer Position des Fahrzeugs und einer Geschwindigkeit des Fahrzeugs an jeder durch das dritte Steuerübergangsmuster (C3) angegebenen Position;

Vergleichen der ersten Beschleunigung, der zweiten Beschleunigung und der dritten Beschleunigung und Festlegen der niedrigsten Beschleunigung unter der ersten Beschleunigung, der zweiten Beschleunigung und der dritten Beschleunigung als die Beschleunigung des Fahrzeugs; und

Steuern einer Verringerung der Geschwindigkeit des Fahrzeugs unter Verwendung der Bremskraft nur der regenerativen Bremse in Übereinstimmung mit der Geschwindigkeit des Fahrzeugs auf der Grundlage des berechneten Zielgeschwindigkeitsmusters (B), wenn von der ATP-Einrichtung eine Meldung empfangen wird, die anzeigt, dass sich das Fahrzeug der Stopp-Grenzposition genähert hat, und wenn das Fahrzeug mit einer Geschwindigkeit fährt, die gleich oder höher ist als die Geschwindigkeit (vx), bei der die Bremskraft der regenerativen Bremse abnimmt.

**2.** Das automatische Zuglenkungsgerät nach Anspruch 1, wobei die Geschwindigkeitssteuereinheit (104) so konfiguriert ist, dass sie das effektive Drehmoment auf der Grundlage der Beschleunigung des Fahrzeugs und der Masse des Fahrzeugs berechnet.

**3.** Das automatische Zuglenkungsgerät nach Anspruch 2, wobei die Geschwindigkeitssteuereinheit (104) konfiguriert ist, um die Geschwindigkeit des Fahrzeugs mit mindestens einem anderen Bremsmittel als der regenerativen Bremse und der regenerativen Bremse zu steuern, wenn die Beschleunigung eine negative Beschleunigung ist.

**4.** Das automatische Zuglenkungsgerät nach Anspruch 2 oder 3, ferner umfassend

eine Störungsabschätzungseinheit (112), die so konfiguriert ist, dass sie einen Laufwiderstand auf der Grundlage des effektiven Drehmoments und einer Drehzahländerung abschätzt.

5. Ein automatisches Zugsteuerungsverfahren, das die folgenden Schritte umfasst

Erhalten einer oberen Geschwindigkeitsgrenze (vl) von einer ATP-Vorrichtung, wobei die obere Geschwindigkeitsgrenze (vl) eine Geschwindigkeit ist, bei der eine mechanische Bremse für den Bremsvorgang verwendet wird;
Berechnen eines Zielgeschwindigkeitsmusters (B), das ein erstes Zielgeschwindigkeitsmuster (B1), ein zweites Zielgeschwindigkeitsmuster (B2) und ein drittes Zielgeschwindigkeitsmuster (B3) umfasst, wobei

das erste Zielgeschwindigkeitsmuster (B1) eine Beziehung zwischen einer Position des Fahrzeugs und einer Geschwindigkeit des Fahrzeugs an jeder Position angibt, wenn mit einer festen Geschwindigkeit gefahren wird, und niedriger als die obere Geschwindigkeitsgrenze (vl) ist,
das zweite Zielgeschwindigkeitsmuster (B2) eine Beziehung zwischen einer Position des Fahrzeugs und einer Geschwindigkeit des Fahrzeugs an jeder Position anzeigt, wenn eine Verringerung einer Geschwindigkeit des Fahrzeugs in Richtung einer Stoppgrenzposition durch die maximale Abbremsung nur einer regenerativen Bremse betätigt wird, und die niedriger als die obere Geschwindigkeitsgrenze (vl) ist,
das dritte Zielgeschwindigkeitsmuster (B3) eine Beziehung zwischen einer Position des Fahrzeugs und einer Geschwindigkeit des Fahrzeugs an jeder Position anzeigt, wenn eine Verringerung einer Geschwindigkeit des Fahrzeugs nur durch die regenerative Bremse bei einer Geschwindigkeit gleich oder höher als einer Geschwindigkeit (vx), bei der eine Bremskraft der regenerativen Bremse abnimmt, betätigt wird, wobei es sich mit dem ersten Zielgeschwindigkeitsmuster (B1) und dem zweiten Zielgeschwindigkeitsmuster (B2) schneidet und niedriger als die obere Geschwindigkeitsgrenze (vl) ist;

Berechnen eines ersten Steuerübergangsmusters (C1) des Fahrzeugs, eines zweiten Steuerübergangsmuster (C2) des Fahrzeugs und eines dritten Steuerübergangsmuster (C3) des Fahrzeugs, wobei

das erste Steuerübergangsmuster (C1) eine Beziehung zwischen einer Position des Fahrzeugs und einer Geschwindigkeit des Fahrzeugs an jeder Position anzeigt, so dass die Geschwindigkeit des Fahrzeugs mit einer Geschwindigkeit des Fahrzeugs des ersten Zielgeschwindigkeitsmusters (B1) zu einem Zeitpunkt nach dem Verstreichen einer vorbestimmten ersten Zeit nach einer aktuellen Zeit übereinstimmt,
das zweite Steuerübergangsmuster (C2) eine Beziehung zwischen einer Position des Fahrzeugs und einer Geschwindigkeit des Fahrzeugs an jeder Position anzeigt, so dass die Geschwindigkeit des Fahrzeugs mit einer Geschwindigkeit des Fahrzeugs des zweiten Zielgeschwindigkeitsmusters (B2) zu einem Zeitpunkt nach dem Verstreichen der vorbestimmten zweiten Zeit nach der aktuellen Zeit übereinstimmt,
das dritte Steuerübergangsmuster (C3), das eine Beziehung zwischen einer Position des Fahrzeugs und einer Geschwindigkeit des Fahrzeugs an jeder Position anzeigt, so dass die Geschwindigkeit des Fahrzeugs mit einer Geschwindigkeit des Fahrzeugs des dritten Zielgeschwindigkeitsmusters (B3) zu einem Zeitpunkt nach dem Verstreichen einer vorbestimmten dritten Zeit nach der aktuellen Zeit übereinstimmt;

Berechnen einer ersten Beschleunigung des Fahrzeugs nach Ablauf einer vorbestimmten Zeit nach der aktuellen Zeit auf der Grundlage der Beziehung zwischen einer Position des Fahrzeugs und einer Geschwindigkeit des Fahrzeugs an jeder durch das erste Steuerübergangsmuster (C1) angegebenen Position;
Berechnen einer zweiten Beschleunigung des Fahrzeugs nach Ablauf einer vorbestimmten Zeit nach der aktuellen Zeit auf der Grundlage der Beziehung zwischen einer Position des Fahrzeugs und einer Geschwindigkeit des Fahrzeugs an jeder durch das zweite Steuerübergangsmuster (C2) angegebenen Position;
Berechnen einer dritten Beschleunigung des Fahrzeugs nach Ablauf einer vorbestimmten Zeit nach der aktuellen Zeit auf der Grundlage der Beziehung zwischen einer Position des Fahrzeugs und einer Geschwindigkeit des Fahrzeugs an jeder durch das dritte Steuerübergangsmuster (C3) angegebenen Position;
Vergleichen der ersten Beschleunigung, der zweiten Beschleunigung und der dritten Beschleunigung und Festlegen der niedrigsten Beschleunigung unter der ersten Beschleunigung, der zweiten Beschleunigung und der dritten Beschleunigung als die Beschleunigung des Fahrzeugs; und
Steuern einer Verringerung der Geschwindigkeit des Fahrzeugs unter Verwendung der Bremskraft nur der regenerativen Bremse in Übereinstimmung mit der Geschwindigkeit des Fahrzeugs auf der Grundlage des berechneten Zielgeschwindigkeitsmusters (B), wenn von der ATP-Einrichtung eine Meldung empfangen wird, die anzeigt, dass sich das Fahrzeug der Stopp-Grenzposition genähert hat, und wenn das Fahrzeug mit einer Geschwindigkeit fährt, die gleich oder höher ist als die Geschwindigkeit (vx), bei der die Bremskraft der regenerativen Bremse abnimmt.

6. Ein Programm mit Befehlen, die, wenn das Programm von einem Computer ausgeführt wird, den Computer veranlassen, das Verfahren nach Anspruch 5 auszuführen.

**Revendications**

1. Appareil d'entraînement de train automatique disposé dans un véhicule comprenant :
une unité de commande de vitesse (104) qui est configurée pour :

acquérir une limite de vitesse supérieure (vl) depuis un dispositif ATP, la limite de vitesse supérieure (vl) étant une vitesse à laquelle un frein mécanique est utilisé pour une opération de freinage ;
calculer un profil de vitesse cible (B) comprenant un premier profil de vitesse cible (B1), un deuxième profil de vitesse cible (B2) et un troisième profil de vitesse cible (B3),

le premier profil de vitesse cible (B1) indiquant une relation entre une position du véhicule et une vitesse du véhicule à chaque position lorsqu'il se déplace à une vitesse fixe, et étant inférieur à la limite de vitesse supérieure (vl),
le deuxième profil de vitesse cible (B2) indiquant une relation entre une position du véhicule et une vitesse du véhicule à chaque position lorsqu'une diminution de la vitesse du véhicule vers une position limite d'arrêt est réalisée par le freinage maximal d'un frein à récupération uniquement, et étant inférieur à la limite de vitesse supérieure (vl),
le troisième profil de vitesse cible (B3) indiquant une relation entre une position du véhicule et une vitesse du véhicule à chaque position lorsqu'une diminution de la vitesse du véhicule est réalisée par le frein à récupération uniquement à une vitesse égale ou supérieure à une vitesse (vx) à laquelle une force de freinage du frein à récupération diminue, croisant le premier profil de vitesse cible (B1) et le deuxième profil de vitesse cible (B2), et étant inférieur à la limite de vitesse supérieure (vl) ;

calculer un premier profil de transition de commande (C1) du véhicule, un deuxième profil de transition de commande (C2) du véhicule, et un troisième profil de transition de commande (C3) du véhicule,

le premier profil de transition de commande (C1) indiquant une relation entre une position du véhicule et une vitesse du véhicule à chaque position afin de faire coïncider la vitesse du véhicule avec une vitesse du véhicule du premier profil de vitesse cible (B1) à un moment après l'écoulement d'une première durée prédéterminée à partir d'un moment actuel,
le deuxième profil de transition de commande (C2) indiquant une relation entre une position du véhicule et une vitesse du véhicule à chaque position afin de faire coïncider la vitesse du véhicule avec une vitesse du véhicule du deuxième profil de vitesse cible (B2) à un moment après l'écoulement de la deuxième durée prédéterminée à partir du moment actuel,
le troisième profil de transition de commande (C3) qui indique une relation entre une position du véhicule et une vitesse du véhicule à chaque position afin de faire coïncider la vitesse du véhicule avec une vitesse du véhicule du troisième profil de vitesse cible (B3) à un moment après l'écoulement d'une troisième durée prédéterminée à partir du moment actuel ;

calculer une première accélération du véhicule lorsqu'une durée prédéterminée s'écoule à partir du moment actuel sur la base de la relation entre une position du véhicule et une vitesse du véhicule à chaque position indiquée par le premier profil de transition de commande (C1) ;
calculer une deuxième accélération du véhicule lorsqu'une durée prédéterminée s'écoule à partir du moment actuel sur la base de la relation entre une position du véhicule et une vitesse du véhicule à chaque position indiquée par le deuxième profil de transition de commande (C2) ;
calculer une troisième accélération du véhicule lorsqu'une durée prédéterminée s'écoule à partir du moment actuel sur la base de la relation entre une position du véhicule et une vitesse du véhicule à chaque position indiquée par le troisième profil de transition de commande (C3) ;
comparer la première accélération, la deuxième accélération, et la troisième accélération, et définir l'accélération la plus faible parmi la première accélération, la deuxième accélération, et la troisième accélération en tant qu'accélération du véhicule ; et
commander une diminution de la vitesse du véhicule en utilisant la force de freinage du frein à récupération uniquement conformément à la vitesse du véhicule sur la base du profil de vitesse cible (B) calculé lorsqu'une notification indiquant que le véhicule s'approche de la position limite d'arrêt est reçue depuis le dispositif ATP et lorsque le véhicule se déplace à une vitesse égale ou supérieure à la vitesse (vx) à laquelle la force de freinage du frein à récupération diminue.

2. Appareil d'entraînement de train automatique selon la revendication 1,
dans lequel l'unité de commande de vitesse (104) est configurée pour calculer le couple effectif sur la base de l'accélération du véhicule et de la masse du véhicule.

3. Appareil d'entraînement de train automatique selon la revendication 2,
dans lequel l'unité de commande de vitesse (104) est configurée pour commander la vitesse du véhicule en utilisant au moins un moyen de freinage autre que le frein à récupération et le frein à récupération lorsque l'accélération est une accélération négative.

4. Appareil d'entraînement de train automatique selon la revendication 2 ou 3, comprenant en outre :
une unité d'estimation des perturbations (112) qui est configurée pour estimer une résistance à l'avancement sur la base du couple effectif et d'une modification de la vitesse.

5. Procédé de commande de train automatique comprenant les étapes :

acquisition d'une limite de vitesse supérieure (vl) depuis un dispositif ATP, la limite de vitesse supérieure (vl) étant une vitesse à laquelle un frein mécanique est utilisé pour une opération de freinage ;
calcul d'un profil de vitesse cible (B) comprenant un premier profil de vitesse cible (B1), un deuxième profil de vitesse cible (B2) et un troisième profil de vitesse cible (B3),

le premier profil de vitesse cible (B1) indiquant une relation entre une position du véhicule et une vitesse du véhicule à chaque position lorsqu'il se déplace à une vitesse fixe, et étant inférieur à la limite de vitesse supérieure (vl),
le deuxième profil de vitesse cible (B2) indiquant une relation entre une position du véhicule et une vitesse du véhicule à chaque position lorsqu'une diminution de la vitesse du véhicule vers une position limite d'arrêt est réalisée par le freinage maximal d'un frein à récupération uniquement, et étant inférieur à la limite de vitesse supérieure (vl),
le troisième profil de vitesse cible (B3) indiquant une relation entre une position du véhicule et une vitesse du véhicule à chaque position lorsqu'une diminution de la vitesse du véhicule est réalisée par le frein à récupération uniquement à une vitesse égale ou supérieure à une vitesse (vx) à laquelle une force de freinage du frein à récupération diminue, croisant le premier profil de vitesse cible (B1) et le deuxième profil de vitesse cible (B2), et étant inférieur à la limite de vitesse supérieure (vl) ;

calcul d'un premier profil de transition de commande (C1) du véhicule, d'un deuxième profil de transition de commande (C2) du véhicule, d'un troisième profil de transition de commande (C3) du véhicule,

le premier profil de transition de commande (C1) indiquant une relation entre une position du véhicule et une vitesse du véhicule à chaque position afin de faire coïncider la vitesse du véhicule avec une vitesse du véhicule du premier profil de vitesse cible (B1) à un moment après l'écoulement d'une deuxième durée prédéterminée à partir d'un moment actuel,
le deuxième profil de transition de commande (C2) indiquant une relation entre une position du véhicule et une vitesse du véhicule à chaque position afin de faire coïncider la vitesse du véhicule avec une vitesse du véhicule du deuxième profil de vitesse cible (B2) à un moment après l'écoulement de la deuxième durée prédéterminée à partir du moment actuel,
le troisième profil de transition de commande (C3) qui indique une relation entre une position du véhicule et une vitesse du véhicule à chaque position afin de faire coïncider la vitesse du véhicule avec une vitesse du véhicule du troisième profil de vitesse cible (B3) à un moment après l'écoulement d'une troisième durée prédéterminée à partir du moment actuel ;

calcul d'une première accélération du véhicule lorsqu'une durée prédéterminée s'écoule à partir du moment actuel sur la base de la relation entre une position du véhicule et une vitesse du véhicule à chaque position indiquée par le premier profil de transition de commande (C1) ;
calcul d'une deuxième accélération du véhicule lorsqu'une durée prédéterminée s'écoule à partir du moment actuel sur la base de la relation entre une position du véhicule et une vitesse du véhicule à chaque position indiquée par le deuxième profil de transition de commande (C2) ;
calcul d'une troisième accélération du véhicule lorsqu'une durée prédéterminée s'écoule à partir du moment actuel sur la base de la relation entre une position du véhicule et une vitesse du véhicule à chaque position indiquée par le troisième profil de transition de commande (C3) ;

comparaison de la première accélération, de la deuxième accélération, et de la troisième accélération, et définition de l'accélération la plus faible parmi la première accélération, la deuxième accélération, et la troisième accélération en tant qu'accélération du véhicule ; et

commande de la diminution de la vitesse du véhicule en utilisant la force de freinage du frein à récupération uniquement conformément à la vitesse du véhicule sur la base du profil de vitesse cible (B) calculé lorsqu'une notification indiquant que le véhicule s'approche de la position limite d'arrêt est reçue depuis le dispositif ATP et lorsque le véhicule se déplace à une vitesse égale ou supérieure à la vitesse (vx) à laquelle la force de freinage du frein à récupération diminue.

6. Programme comprenant des instructions qui, lorsque le programme est exécuté par un ordinateur, amènent l'ordinateur à réaliser le procédé selon la revendication 5.

# FIG. 1

# FIG. 2

FIG. 3

```
                    ┌─────────────┐
                    │    START    │
                    └─────────────┘
                           │
                           ▼
              ┌──────────────────────────┐
              │   GENERATE  CURVE  A1     │──── S1
              └──────────────────────────┘
                           │
                           ▼
              ┌──────────────────────────┐
              │   GENERATE  CURVE  B1     │──── S2
              └──────────────────────────┘
                           │
                           ▼
              ┌──────────────────────────┐
              │  DERIVE  POLYNOMIAL OF C1 │──── S3
              └──────────────────────────┘
                           │
                           ▼
              ┌──────────────────────────┐
              │   GENERATE  CURVE  A2     │──── S4
              └──────────────────────────┘
                           │
                           ▼
              ┌──────────────────────────┐
              │   GENERATE  CURVE  B2     │──── S5
              └──────────────────────────┘
                           │
                           ▼
              ┌──────────────────────────┐
              │  DERIVE  POLYNOMIAL OF C2 │──── S6
              └──────────────────────────┘
                           │
                           ▼
              ┌──────────────────────────┐
              │     OUTPUT  SMALLEST      │──── S7
              │      ACCELERATION         │
              └──────────────────────────┘
                           │
                           ▼
              ┌──────────────────────────┐
              │  MULTIPLY MASS OF VEHICLE │──── S8
              └──────────────────────────┘
                           │
                           ▼
              ┌──────────────────────────┐
              │  RESTRICT TRACTION FORCE  │
              │  IN RANGE BETWEEN UPPER   │──── S9
              │  LIMIT AND LOWER LIMIT    │
              └──────────────────────────┘
                           │
                           ▼
              ┌──────────────────────────┐
              │  GENERATE MOTOR COMMAND   │──── S10
              └──────────────────────────┘
                           │
                           ▼
              ┌──────────────────────────┐
              │   OUTPUT MOTOR COMMAND    │──── S11
              └──────────────────────────┘
                           │
                           ▼
                    ┌─────────────┐
                    │     END     │
                    └─────────────┘
```

# FIG. 4

EP 3 238 980 B1

# FIG. 5

FIG. 6

EP 3 238 980 B1

## FIG. 7

START

GENERATE CURVE A1 — S1

GENERATE CURVE B1 — S2

DERIVE POLYNOMIAL OF C1 — S3

GENERATE CURVE A2 — S4

GENERATE CURVE B2 — S5

DERIVE POLYNOMIAL OF C2 — S6

GENERATE CURVE B1 AND B2 — S12

ACQUIRE INFORMATION ON DECELERATION β — S13

GENERATE CURVE B3 — S14

DERIVE POLYNOMIAL OF C3 — S15

OUTPUT SMALLEST ACCELERATION — S7a

MULTIPLY MASS OF VEHICLE — S8

RESTRICT TRACTION FORCE IN RANGE BETWEEN UPPER LIMIT AND LOWER LIMIT — S9

GENERATE MOTOR COMMAND — S10

OUTPUT MOTOR COMMAND — S11

END

# FIG. 8

EP 3 238 980 B1

# FIG. 9

```
                    START

        GENERATE  CURVE  A1        ──S1

        GENERATE  CURVE  B1        ──S2

       DERIVE  POLYNOMIAL  OF  C1  ──S3

        GENERATE  CURVE  A2        ──S4

        GENERATE  CURVE  B2        ──S5

       DERIVE  POLYNOMIAL  OF  C2  ──S6

        GENERATE  CURVE  B1  AND
                B2                 ──S12

       ACQUIRE  INFORMATION  ON
           DECELERATION  β         ──S13

        GENERATE  CURVE  B3        ──S14

       DERIVE  POLYNOMIAL  OF  C3  ──S15

        OUTPUT  SMALLEST
          ACCELERATION            ──S7a

     MULTIPLY  MASS  OF  VEHICLE   ──S8


        CALCULATE  DISTURBANCE     ──S16

         CANCEL  DISTURBANCE       ──S17

      RESTRICT  TRACTION  FORCE
      IN  RANGE  BETWEEN  UPPER    ──S9a
      LIMIT  AND  LOWER  LIMIT

      GENERATE  MOTOR  COMMAND     ──S10a

       OUTPUT  MOTOR  COMMAND      ──S11

                    END
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011087364 A
- GB 2460528 A

- US 2013096741 A1
- US 2011184619 A